(19) Europäisches Patentamt
European Patent Office
Office européen des brevets

(11) EP 1 275 677 A1

(12) EUROPEAN PATENT APPLICATION
published in accordance with Art. 158(3) EPC

(43) Date of publication:
15.01.2003 Bulletin 2003/03

(21) Application number: 01996572.2

(22) Date of filing: 12.11.2001

(51) Int Cl.[7]: C08G 64/30, C08L 69/00

(86) International application number:
PCT/JP01/09874

(87) International publication number:
WO 02/040569 (23.05.2002 Gazette 2002/21)

(84) Designated Contracting States:
AT BE CH CY DE DK ES FI FR GB GR IE IT LI LU MC NL PT SE TR

(30) Priority: 14.11.2000 JP 2000347136

(71) Applicant: TEIJIN LIMITED
Osaka-shi Osaka 541-0054 (JP)

(72) Inventors:
- SAWAKI, Toru,
c/o Teijin Limited Iwakuni Res. ctr
Iwakuni-shi, Yamaguchi 740-0014 (JP)
- HIRATA, Masumi,
c/o Teijin Limited Iwakuni Res ctr
Iwakuni-shi, Yamaguchi 740-0014 (JP)
- SASAKI, Katsushi,
Teijin Limited Iwakuni Res. Ctr
Iwakuni-shi, Yamaguchi 740-0014 (JP)
- MATSUOKA, Yoshiki,
Teijin Limited Iwakuni Res. Ctr
Iwakuni-shi, Yamaguchi 740-0014 (JP)
- SHIMONARU, Masashi,
Teijin Ltd Iwakuni Res. Ctr
Iwakuni-shi, Yamaguchi 740-0014 (JP)

(74) Representative: Hallybone, Huw George et al
Carpmaels and Ransford,
43 Bloomsbury Square
London WC1A 2RA (GB)

# (54) AROMATIC POLYCARBONATE, PROCESS FOR PRODUCING THE SAME, AND COMPOSITION CONTAINING THE SAME

(57) A polycarbonate having excellent color, a low content of foreign substances, a low content of an OH terminal group, little quality variation and excellent moldability and a production method therefor.

The ester exchange of an oligocarbonate having a viscosity average molecular weight of 4,000 or more and a terminal hydroxyl group content of 15 to 45 mol% based on the total of all the terminal groups is further carried out while an ester exchange reaction accompanied by the elimination of an aromatic monohydroxy compound and an ester exchange reaction accompanied by the elimination of a diaryl carbonate compound are caused to take place in a ratio of 1:0.1 to 1:1.

EP 1 275 677 A1

## Description

### Field of the Invention

The present invention relates to an aromatic polycarbonate, a production method therefor and a composition comprising the same. More specifically, it relates to a high-quality aromatic polycarbonate which is excellent in color, rarely contaminates a metal mold, enables long-term continuous and precision molding and provides little cloudy moldings, a production method therefor and a composition comprising the same.

### Prior Art

Polycarbonates have been produced by directly polymerizing an aromatic dihydroxy compound such as bisphenol A with phosgene in the presence of an organic solvent such as methylene chloride (interfacial method) or by carrying out an ester exchange reaction between an aromatic dihydroxy compound and an aromatic carbonic acid diester (melt polycondensation method).

Out of these, the melt polycondensation method has an advantage that a polycarbonate can be produced at a lower cost than the interfacial method and is preferred from the viewpoint of environmental sanitation because a toxic substance such as phosgene is not used.

However, the melt polymerization method has a disadvantage that the obtained polycarbonate is inferior in quality because the polymerization speed is lower than in the interfacial method and polymerization must be carried out at a high temperature.

That is, the reaction for producing a polycarbonate through ester exchange between an aromatic dihydroxy compound and an aromatic carbonic acid diester is already well known and a method in which polymerization is carried out while an aromatic monohydroxy compound is by-produced by a reaction between the OH terminal of the aromatic dihydroxy compound and the phenyl terminal of the aromatic carbonic acid diester is the most generally employed.

When the amount of the phenyl terminal group substantially equal to the amount of the OH terminal group is existent, this reaction rate becomes the highest and the polymerization time for producing a polymer having a targeted polymerization degree becomes the shortest. On the contrary, as the amount of the phenyl terminal group becomes smaller or larger than the amount of the OH terminal group, the reaction rate becomes lower and the polymerization time becomes longer. Since melt polymerization must be carried out at a temperature higher than 250°C, the polymerization time is closely connected with the heat deterioration of a polymer. That is, when the polymerization time is short, the color of the obtained polycarbonate improves and the amount of foreign matter generated by heat deterioration decreases.

Meanwhile, it is known that the amount of the OH terminal of a polycarbonate is preferably as small as possible from the viewpoints of the heat resistance, moist heat resistance and weatherability of the polycarbonate.

Therefore, when a polycarbonate having a small amount of the OH terminal group is to be produced by melt polymerization, a polymerization reaction must be carried out by making the amount of the phenyl terminal group much larger than the amount of the OH terminal group, whereby the reaction rate decreases, the color of the obtained polycarbonate worsens, and the content of foreign matter increases.

As means of avoiding these, there is proposed a method in which polymerization is carried out in the presence of the phenyl terminal group which is substantially equal in quantity to the OH terminal group to produce a polycarbonate having a targeted polymerization degree and an OH terminal content of approximately 50 % based on the total of all the terminal groups and then the OH terminal of the polymer is capped with a terminal capping agent to be reduced in quantity. However, this method has a defect that the expensive capping agent is used and may also have problems such as the deterioration of the polymer in the step of capping the terminal and a change in the degree of polymerization adjusted by polymerization.

As another form of ester exchange between the aromatic dihydroxy compound and the aromatic carbonic acid diester, there is also known a two-stage reaction comprising a first stage in which the aromatic carbonic acid diester is condensed at both terminals of the aromatic dihydroxy compound by ester exchange to form an oligomer by using the aromatic carbonic acid diester in an amount 2 times the number of mols of the aromatic dihydroxy compound and a second stage in which polymerization is carried out while a diaryl carbonate (aromatic carbonic acid diester) is by-produced by the ester exchange of the oligomer. According to this method, a polycarbonate having an extremely low content of the OH terminal group can be obtained.

However, since an ester exchange reaction accompanied by the elimination of a diaryl carbonate occurs more hardly than an ester exchange reaction accompanied by the elimination of an aromatic monohydroxy compound, much higher temperature and longer polymerization time are required and a powerful basic catalyst such as lithium aluminum hydride or tetraethylaluminum borohydride is needed. Therefore, a polycarbonate obtained by the ester exchange reaction accompanied by the elimination of the diaryl carbonate is inferior in quality such as color and the content of

foreign matter than a polycarbonate obtained by an ester exchange reaction accompanied by the elimination of the aromatic monohydroxy compound.

JP-B 47-14742 and JP-B 47-14743 (the term "JP-B" as used herein means an "examined Japanese patent publication") disclose a method of producing a high-quality polycarbonate by forming an initial condensate through an ester exchange reaction between an aromatic dihydroxy compound and aromatic carbonic acid diester and carrying out the post-condensation reaction of the initial condensate in the presence of a quaternary ammonium compound to promote the elimination reaction of the aromatic monohydroxy compound and diaryl carbonate in the post-condensation reaction and shorten the post-polycondensation time.

It is recited in the above publications that since the quaternary ammonium compound has the effect of promoting an ester exchange reaction accompanied by the elimination of the diaryl carbonate in this method, the amount of the aromatic carbonic acid diester can be increased to 1.5 times the number of mols of the aromatic dihydroxy compound and it is effective to add the quaternary ammonium compound in the post-polymerization stage.

However, a catalyst must be added in the latter stage of polymerization separate from the initial stage of polymerization in this method, and it has been found by studies conducted by the inventors of the present invention that the quaternary ammonium compound has low heat resistance and is quickly decomposed under polymerization conditions. Consequently, this method has a defect that the quaternary ammonium compound must be continuously added to a reaction system to retain its effectiveness as a catalyst.

Further, there is no description of the OH terminal content of the obtained polycarbonate in this method. This method has a serious problem to be solved for the production of a polycarbonate having a low OH terminal content. That is, when an ester exchange reaction accompanied by the elimination of a diaryl carbonate is promoted in the latter stage of polymerization, the phenyl terminal of the initial condensate is selectively consumed with the result that the OH terminal content of the obtained polycarbonate becomes larger than that of the initial condensate.

Therefore, the ester exchange reaction accompanied by the elimination of the diaryl carbonate is generally not used as industrial means of producing a polycarbonate having a low OH terminal content by melt polymerization.

Thus, it is difficult to produce a polycarbonate having a low OH terminal content and excellent quality such as color and the content of foreign matter by melt polymerizing an aromatic dihydroxy compound with an aromatic carbonic acid diester. When a polycarbonate having a high degree of polymerization is to be produced by melt polymerization, an ester exchange reaction more hardly occurs because the content of a terminal group decreases as the degree of polymerization increases, thereby making it more difficult to obtain a polycarbonate having a low OH terminal content, excellent color and a low content of foreign matter.

JP-A 9-278877 (the term "JP-A" as used herein means an "unexamined published Japanese patent application") discloses a method of producing an aromatic polycarbonate through ester exchange between a diphenol and a carboxylic acid diaryl ester in the presence of a catalyst, comprising a first stage in which a mixture of raw materials is heated at a temperature of 290°C and a pressure of 100 Pa to normal pressure to distill off the formed monophenol so as to form an oligocarbonate having an OH terminal content of 10 to 35 mol% and a second stage in which the oligocarbonate is polycondensed in a self-cleaning high-viscosity reactor at a temperature of 240 to 340° C and a pressure of 1 to 50,000 Pa for 10 to 60 minutes to produce a polycarbonate. However, polymerization is carried out while an aromatic monohydroxy compound is by-produced in this method and there is no description of a reaction accompanied by the elimination of a diaryl carbonate.

Since polycarbonates have excellent optical properties, moldability and mechanical properties, they are widely used in substrates for recording materials and the like. However, when they are molded for a long time, a metal mold is contaminated and the transferability of fine grooves to the surface of a recording material deteriorates, thereby causing a failure of the recording material.

Consequently, a production system must be suspended to clean a metal mold after a specified period passed, with the result of a reduction in the system operation rate, thereby boosting molding costs. Therefore, improvement has been desired. Further, as a phenomenon called "cloud" is observed in a molded product, a substrate having such a cloud cannot be used in a recording material. Therefore, the suppression of the cloud has been desired as well.

## Summary of the Invention

In view of the above problems, utmost efforts have been made to find a method of producing a polycarbonate having a low OH terminal content and excellent quality by melt polymerization using an ester exchange reaction between an aromatic dihydroxy compound and an aromatic carbonic acid diester. As a result, it has been found that a polycarbonate having a low OH terminal content can be obtained in a shorter period of time than in the prior art by using an ester exchange reaction accompanied by the elimination of a diaryl carbonate in a certain proportion, in addition to an ester exchange reaction accompanied by the elimination of an aromatic monohydroxy compound, which has been considered as the main ester exchange reaction, and the quality of the polycarbonate is thereby improved. It has also been discovered that a polycarbonate obtained by controlling the reaction has unexpected features that it

contaminates a metal mold and generates a cloud less than the conventional polycarbonate. The present invention has been accomplished based on these findings.

That is, it is an object of the present invention to provide a method of producing a polycarbonate of high quality unattainable by the prior art, which has low contents of a terminal OH group and foreign matter, excellent color and continuous precision moldability, rarely contaminates a metal mold and hardly generates a cloud, by carrying out a melt polycondensation reaction between an aromatic dihydroxy compound and an aromatic carbonic acid diester.

It is another object of the present invention to provide a method of producing a high-molecular weight polycarbonate which has low contents of an OH terminal group and foreign matter, excellent color and thermal stability, rarely contaminates a metal mold and hardly generates a cloud by causing an ester exchange reaction accompanied by the elimination of an aromatic monohydroxy compound and an ester exchange reaction accompanied by the elimination of a diaryl carbonate in a certain ratio when an aromatic dihydroxy compound and an aromatic carbonic acid diester are melt polymerized in the presence of a catalyst.

It is still another object of the present invention to provide an aromatic polycarbonate which is produced by the method of the present invention and has the above excellent characteristic properties.

It is a further object of the present invention to provide a composition comprising the aromatic polycarbonate having the above excellent characteristic properties of the present invention and other specific components and having the excellent characteristic properties of the above aromatic polycarbonate.

Other objects and advantages of the present invention will become apparent from the following description.

According to the present invention, firstly, the above objects and advantages of the present invention are attained by a method of producing an aromatic polycarbonate, comprising the steps of:

(1) forming a first aromatic polycarbonate having a viscosity average molecular weight of at least 4,000 and a terminal hydroxy group content of 15 to 45 mol% based on the total of all the terminal groups by carrying out an ester exchange reaction between an aromatic dihydroxy compound and an aromatic carbonic acid diester; and

(2) forming a second aromatic polycarbonate having a viscosity average molecular weight of 10,000 or more and higher than the viscosity average molecular weight of the first aromatic polycarbonate and a lower terminal hydroxy group content based on the total of all the terminal groups than the terminal hydroxy group content of the first aromatic polycarbonate by subjecting the first aromatic polycarbonate to polymerization accompanied by a first ester exchange reaction for eliminating an aromatic monohydroxy compound and a second ester exchange reaction for eliminating an aromatic carbonic acid diester to ensure that the molar ratio of the aromatic monohydroxy compound to the aromatic carbonic acid diester becomes 1:0.1 to 1:1.

According to the present invention, secondly, the above objects and advantages of the present invention are attained by an aromatic polycarbonate which is produced by the above method of the present invention and has a terminal hydroxyl group content of 35 mol% or less based on the total of all the terminal groups, contains 50,000 or less particles having a particle diameter of 0.5 µm or more per g of the aromatic polycarbonate and has a viscosity average molecular weight of 10,000 or more.

According to the present invention, thirdly, the above objects and advantages of the present invention are attained by a composition comprising an aromatic polycarbonate produced by the above method of the present invention and at least one selected from the group consisting of an ester of an aliphatic alcohol and an aliphatic carboxylic acid, an inorganic filler and a thermoplastic resin other than the polycarbonate.

Brief Description of the Drawings

Fig. 1 is a sectional view of a single-shaft reactor;
Fig. 2 is a sectional view taken along A-A of Fig. 1;
Fig. 3 is a diagram showing examples of a support blade with a tail wing of Fig. 1;
Fig. 4 is a perspective view of a twin-shaft reactor;
Fig. 5 is a plan sectional view of a twin-shaft reactor;
Figs. 6(A) and 6(B) are sectional views of twin-shaft reactors;
Figs. 7(A) and 7(B) are detailed diagrams of agitation units used in the section A of Fig. 5;
Fig. 8 is an assembly diagram of agitation units used in the sections B of Fig. 5 and Fig. 12;
Fig. 9 is a diagram showing an agitation unit used in the sections B of Fig. 5 and Fig. 12;
Fig. 10 is a diagram showing an agitation unit used in the section B of Fig. 5;
Figs. 11(A) and 11(B) are detailed diagrams of agitation units used in the section A of Fig. 12;
Fig. 12 is a sectional view of a twin-shaft reactor;

Fig. 13 is a sectional view of a twin-shaft reactor;
Fig. 14 is a diagram for explaining the calculation of the surface area of a single-shaft reactor; and
Fig. 15 is a detailed diagram of the vent of a twin-shaft reactor.

## Detailed Description of the Preferred Embodiment

The present invention will be described hereinbelow. A description is first given of the method of the present invention.

In the step (1), an ester exchange reaction between an aromatic dihydroxy compound and an aromatic carbonic acid diester is carried out to form a first aromatic polycarbonate having a viscosity average molecular weight of at least 4,000 and a terminal hydroxyl group content of 15 to 45 mol% based on the total of all the terminal groups.

Examples of the above aromatic dihydroxy compound include bis(4-hydroxyphenyl)methane, 2,2-bis(4-hydroxyphenyl)propane, 2,2-bis(4-hydroxy-3-methylphenyl)propane, 4,4-bis(4-hydroxyphenyl)heptane, 2,2-bis(4-hydroxy-3,5-dichlorophenyl)propane, 2,2-bis(4-hydroxy-3,5-dibromophenyl)propane, bis(4-hydroxyphenyl)oxide, bis (3,5-dichloro-4-hydroxyphenyl)oxide, p,p'-dihydroxydiphenyl, 3,3'-dichloro-4,4'-dihydroxydiphenyl, bis(hydroxyphenyl) sulfone, resorcinol, hydroquinone, 1,4-dihydroxy-2,5-dichlorobenzene, 1,4-dihydroxy-3-methylbenzene, bis(4-hydroxyphenyl)sulfide and bis(4-hydroxyphenyl)sulfoxide. Out of these, 2,2-bis(4-hydroxyphenyl)propane (generally called "bisphenol A") is particularly preferred.

Examples of the above aromatic carboxylic acid diester include diphenyl carbonate, ditolyl carbonate, bis (chlorophenyl)carbonate, m-cresyl carbonate, dinaphthyl carbonate and bis(diphenyl)carbonate. Out of these, diphenyl carbonate is particularly preferred.

The polycarbonate used in the present invention may contain as required an aliphatic diol such as ethylene glycol, 1,4-butanediol, 1,4-cyclohexanedimethanol or 1,10-decanediol and also a dicarboxylic acid component such as succinic acid, isophthalic acid, 2,6-naphthalenedicarboxylic acid, adipic acid, cyclohexanecarboxylic acid or terephthalic acid, or oxyacid component such as lactic acid, p-hydroxybenzoic acid or 6-hydroxy-2-naphthoic acid as a comonomer.

In the present invention, the ester exchange catalyst used for melt polymerization may be an alkali metal compound, alkaline earth metal compound or nitrogen-containing basic compound.

The alkali metal compound is a hydroxide, bicarbonate, carbonate, acetate, nitrate, nitrite, sulfite, cyanate, thiocyanate, stearate, borohydride, benzoate, hydrogenphosphate, bisphenol or phenol salt of an alkali metal. Specific examples of the alkali metal compound include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium nitrate, potassium nitrate, lithium nitrate, sodium nitrite, potassium nitrite, lithium nitrite, sodium sulfite, potassium sulfite, lithium sulfite, sodium cyanate, potassium cyanate, lithium cyanate, sodium thiocyanate, potassium thiocyanate, lithium thiocyanate, sodium stearate, potassium stearate, lithium stearate, sodium borohydride, potassium borohydride, lithium borohydride, sodium phenylborate, sodium benzoate, potassium benzoate, lithium benzoate, disodium hydrogenphosphate, dipotassium hydrogenphosphate, dilithium hydrogenphosphate, disodium salts, dipotassium salts and dilithium salts of bisphenol A, and sodium salts, potassium salts and lithium salts of phenol.

The alkaline earth metal compound is a hydroxide, bicarbonate, carbonate, acetate, nitrate, nitrite, sulfite, cyanate, thiocyanate, stearate, benzoate, bisphenol or phenol salt of an alkaline earth metal.

Specific examples of the alkaline earth metal compound include calcium hydroxide, barium hydroxide, strontium hydroxide, calcium bicarbonate, barium bicarbonate, strontium bicarbonate, calcium carbonate, barium carbonate, strontium carbonate, calcium acetate, barium acetate, strontium acetate, calcium nitrate, barium nitrate, strontium nitrate, calcium nitrite, barium nitrite, strontium nitrite, calcium sulfite, barium sulfite, strontium sulfite, calcium cyanate, barium cyanate, strontium cyanate, calcium thiocyanate, barium thiocyanate, strontium thiocyanate, calcium stearate, barium stearate, strontium stearate, calcium borohydride, barium borohydride, strontium borohydride, calcium benzoate, barium benzoate, strontium benzoate, calcium salts, barium salts and strontium salts of bisphenol A, and calcium salts, barium salts and strontium salts of phenol.

In the present invention, (i) an alkali metal salt of an ate complex of a group XIV element of the periodic table or (ii) an alkali metal salt of an oxoacid of a group XIV element of the periodic table may be optionally used as the alkali metal compound of the catalyst. The group XIV element of the periodic table is silicon, germanium or tin.

Examples of the above (i) alkali metal salt of the ate complex of the group XIV element of the periodic table are enumerated in JP-A 7-268091. Specifically, germanium (Ge) compounds include $NaGe(OMe)_5$, $NaGe(OEt)_3$, $NaGe(OPr)_5$, $NaGe(OBu)_5$, $NaGe(OPh)_5$, $LiGe(OMe)_5$, $LiGe(OBu)_5$ and $LiGe(OPh)_5$. Tin (Sn) compounds include $NaSn(OMe)_3$, $NaSn(OMe)_2(OEt)$, $NaSn(OPr)_3$, $NaSn(O\text{-}n\text{-}C_6H_{13})_3$, $NaSn(OMe)_5$, $NaSn(OEt)_5$, $NaSn(OBu)_5$, $NaSn(O\text{-}n\text{-}C_{12}H_{25})_5$, $NaSn(OEt)_3$, $NaSn(OPh)_5$ and $NaSnBu_2(OMe)_3$.

Preferred examples of the above (ii) alkali metal salt of the oxoacid of the group XIV element of the periodic

table include alkali metal salts of silicic acid, stannic acid, germanium(II) acid (germanous acid) and germanium(IV) acid (germanic acid).

The alkali metal salt of silicic acid is, for example, an acidic or neutral alkali metal salt of monosilicic acid or a condensate thereof, as exemplified by monosodium orthosilicate, disodium orthosilicate, trisodium orthosilicate and tetrasodium orthosilicate.

The alkali metal salt of stannic acid is, for example, an acidic or neutral alkali metal salt of monostannic acid or a condensate thereof, as exemplified by disodium monostannate ($Na_2SnO_3 \cdot xH_2O$, x = 0 to 5) and tetrasodium monostannate ($Na_4SnO_4$).

The alkali metal salt of germanium(II) acid (germanous acid) is, for example, an acidic or neutral alkali metal salt of monogermanous acid or a condensate thereof, as exemplified by monosodium germanite ($NaHGeO_2$).

The alkali metal salt of germanium(IV) acid (germanic acid) is, for example, an acidic or neutral alkali metal salt of monogermanium(IV) acid or a condensate thereof, as exemplified by monolithium orthogermanate ($LiH_3GeO_4$), disodium orthogermanate, tetrasodium orthogermanate, disodium digermanate ($Na_2Ge_2O_5$), disodium tetragermanate ($Na_2Ge_4O_9$) and disodium pentagermanate ($Na_2Ge_5O_{11}$).

The alkali metal compound or alkaline earth metal compound as a catalyst is preferably used in an amount of $1 \times 10^{-8}$ to $5 \times 10^{-5}$ equivalent in terms of the alkali metal element or alkaline earth metal element contained in the catalyst based on 1 mol of the aromatic dihydroxy compound. The amount is more preferably $5 \times 10^{-7}$ to $1 \times 10^{-5}$ equivalent based on the same standard.

When the amount of the alkali metal element or alkaline earth metal element contained in the catalyst is outside the range of $1 \times 10^{-8}$ to $5 \times 10^{-5}$ equivalent based on 1 mol of the aromatic dihydroxy compound, it may exert a bad influence upon the physical properties of the obtained polycarbonate or an ester exchange reaction may not proceed fully, thereby making it impossible to obtain a polycarbonate having a high molecular weight.

Examples of the nitrogen-containing basic compound as a catalyst include ammonium hydroxides having an alkyl, aryl or alkylaryl group such as tetramethylammonium hydroxide ($Me_4NOH$), tetraethylammonium hydroxide ($Et_4NOH$), tetrabutylammonium hydroxide ($Bu_4NOH$), benzyltrimethylammonium hydroxide [$\phi$-$CH_2(Me)_3NOH$] and hexadecyltrimethylammonium hydroxide; tertiary amines such as triethylamine, tributylamine, dimethylbenzylamine and hexadecyldimethylamine; and basic salts such as tetramethylammonium borohydride ($Me_4NBH_4$), tetrabutylammonium borohydride ($Bu_4NBH_4$), tetramethylammonium tetraphenylborate ($Me_4NBPh_4$) and tetrabutylammonium tetraphenylborate ($Bu_4NBPh_4$).

The above nitrogen-containing basic compound is preferably used in an amount of $1 \times 10^{-5}$ to $5 \times 10^{-3}$ equivalent in terms of the ammonia nitrogen atom contained in the nitrogen-containing basic compound based on 1 mol of the aromatic dihydroxy compound. The amount is more preferably $2 \times 10^{-5}$ to $5 \times 10^{-4}$ equivalent, particularly preferably $5 \times 10^{-5}$ to $5 \times 10^{-4}$ equivalent based on the same standard.

In the present invention, the above ester exchange catalyst may be added at the start of an ester exchange reaction in the step (1) and does not need to be newly added along with the proceeding of the polymerization reaction, for example, in the latter stage of polycondensation in the step (2) to be described hereinafter.

The first aromatic polycarbonate having a viscosity average molecular weight of at least 4,000 and a terminal hydroxyl group content of 15 to 45 mol% based on the total of all the terminal groups is formed by the ester exchange reaction in the step (1). The viscosity average molecular weight is preferably 4,000 or more and less than 10,000, more preferably 4,000 or more and less than 8,000. The terminal hydroxyl (OH) group content is preferably 20 to 40 mol% based on the total of all the terminal groups.

The operation of controlling the terminal OH group content of the first aromatic polycarbonate slightly changes according to whether a batch system or a continuous system is used.

In other words, when the batch system is used, the molecular weight and the OH group content of the reaction product in a polymerizer change continuously in the polymerizer. Therefore, the reaction product in the polymerizer is analyzed by sampling to measure the relationship between the amount of a by-product essentially composed of an aromatic monohydroxy compound formed by the ester exchange reaction and the molecular weight of the reaction product and the relationship between the molar ratio of the aromatic carbonic acid diester and the aromatic dihydroxy compound used as raw materials and the OH terminal content of the reaction product in the polymerizer, thereby making it possible to maintain the molecular weight and the OH group content of the first aromatic polycarbonate at predetermined ranges.

In the case of the batch system, it is possible to check the OH group content of the reaction product in the reactor from any molecular weight.

When the continuous system is used, polymerization is carried out by arranging a plurality of reactors in series and the viscosity average molecular weight of the reaction product changes stepwise between polymerizers. Therefore, the OH terminal content of the reaction product at the outlet of at least one polymerization reactor which is operated under the condition that ensures that the viscosity average molecular weight of the reaction product at the outlet of the reactor should become 4,000 or more must be maintained at a range of 15 to 45 mol%.

The OH terminal content of an oligomer is generally controlled by adjusting the molar ratio of the aromatic dihydroxy compound to the aromatic carbonic acid diester with no matter whether the batch system or continuous system is used and the molar ratio changes according to the characteristics of the system used. Generally speaking, the aromatic carbonic acid diester is used in an amount of 1.00 to 1.1 mols based on 1 mol of the aromatic dihydroxy compound. The selected molar ratio of the raw materials is preferably maintained with an accuracy of 0.5 %.

The type of the reactor used to produce the oligomer is not particularly limited and generally known reactors may be used. A vertical stirring tank is preferably used. In order to suppress distilling off the aromatic carbonic acid diester used as a raw material to the outside of the system, a vertical stirring tank equipped with a fractionating column is also preferably used.

The material of the reactor used to produce the oligomer is not particularly limited but at least the inner surface in contact with the reaction products of the reactor is made from a material having a low iron content, such as stainless steel or nickel.

The reaction temperature for producing the oligomer may be a generally known reaction temperature. It is generally 100 to 300°C, preferably 180 to 270°C. The reaction pressure at this point is generally normal pressure to 133 Pa (1 mmHg), preferably 66,500 Pa (500 mmHg) to 1,330 Pa (10 mmHg).

A mixture of the aromatic dihydroxy compound and the aromatic carbonic acid diester used as raw materials in the step (1) is desirably filtered with a filter at a temperature equal to or lower than the melting point of the aromatic dihydroxy compound before the step (1).

Preferably, the filter has a filtration layer made of metal fibers and having a nominal filtration accuracy of 0.1 to 1 µm. By using this filter, the number of foreign substances contained in the polycarbonate obtained by polycondensation can be reduced and the color of the polycarbonate can be improved. Although the reason for this is not clear, it can be considered that foreign matter as big as 1 µm or more contains substances which worsen the color of the polycarbonate and a large number of reaction retarding substances and the polycondensation reaction rate is improved by removing these, whereby a polycarbonate having a low heat history and excellent color can be obtained.

The above filter used in the present invention is a filter having a filtration layer made of metal fibers which are inactive with a mixture of the raw materials, such as SUS, as exemplified by metal nonwoven cloth formed of metal fibers in a wet or dry manner and a filter obtained by sintering the nonwoven cloth. It has been found that the metal fiber filter is superior in heat resistance and chemical resistance to a membrane filter and has longer service life than the membrane filter. Although the reason for this is unclear, it is assumed that the membrane filter collects foreign matter on the surface whereas the metal fiber filter collects foreign matter along its entire thickness, thereby increasing collection capacity. Therefore, when the metal fiber filter is used, filtration can be carried out for a long time by using even a filter having a small opening of 0.1 to 1 µm without prefiltering each raw material in advance.

In the subsequent step (2) of the method of the present invention, the first aromatic polycarbonate formed in the step (1) is further polymerized.

At this point, the first ester exchange reaction for eliminating the aromatic monohydroxy compound and the second ester exchange reaction for eliminating the aromatic carbonic acid diester in the polymerization reaction are carried out to ensure that the molar ratio of the aromatic monohydroxy compound to the aromatic carbonic acid diester should be 1:0.1 to 1:1, preferably 1:0.2 to 1:0.7.

It can be confirmed by collecting the vapor of a by-product generated from the reactor without changing the composition thereof and measuring the molar ratio of the aromatic monohydroxy compound to the diaryl carbonate contained in the collected product that the reaction for eliminating the aromatic monohydroxy compound and the reaction for eliminating the diaryl carbonate proceed in the above ratio.

When the proportion of the reaction for eliminating the diaryl carbonate exceeds the above range, the OH terminal content of the obtained polycarbonate becomes high disadvantageously. When the proportion of the reaction for eliminating the diaryl carbonate falls below the above range, the time required for polymerization becomes long and the quality of the obtained polycarbonate deteriorates disadvantageously.

To cause the first ester exchange reaction and the second ester exchange reaction of the polymerization reaction in the above step (2) to proceed as described above, a reactor having excellent thin film formability is preferably used. The reactor is preferably capable of controlling the surface area of a polymer having a liquid depth of 50 mm or less to 50 % or more of the surface area of the polymer in the reactor.

A thin film having a liquid depth of 50 mm or less can be formed by a method in which the reaction product is applied to a portion opposite to a scraper or the like of the end plate of the reactor or the wall of the reactor such as the shell wall of the reactor with a scraper having a clearance of 50 mm or less, a method in which the reaction product is caused to fall along the constituent elements of an agitating blade (to be simply referred to as "agitating blade constituent elements" hereinafter) such as disks, support blades, agitating units and scrapers, or support bodies such as wires for dropping a polymer in the reactor, or a method in which the reaction product is freely dropped.

The agitating blade as used herein includes agitating blade constituent elements such as end disks, hollow disks and support blades in the case of a horizontal single-shaft reactor and members having an agitating function

including agitating blade constituent elements such as agitating units in the case of a horizontal twin-shaft reactor.

The expression "agitation axis direction" means a line which is the center of rotation when the agitating blade rotates and does not always mean that an agitation axis actually exists. This shall apply to the "horizontal twin-shaft reactor". The word "twin-shaft" in this case also means that two agitating blades are existent and does not always mean that agitation axes actually exist.

The surface of the polymer deforms irregularly as it contains a large number of air bubbles formed by the evaporation of by-produced low-boiling substances in an actual reaction state. For the calculation of the liquid depth or the surface area in the present invention, it is considered that the polymer forms a smooth and flat surface regardless of the deformation of the surface caused by air bubbles . The liquid depth refers to the thickness of a solution obtained by measuring the depth of the solution in a direction perpendicular to the flat surface (may be curved) based on the assumption that the surface is smooth and flat.

For example, when the polymer is applied to the wall of the reactor, the clearance between the support blade and the wall of the reactor is set to 50 mm or less, whereby a thin film suitable for carrying out the present invention can be formed and the surface area of the thin film becomes equal to the surface area of the wall of the reactor to which the reaction product is applied.

When the reaction product falls along the support bodies installed in the space of the reactor in the form of a liquid film or a strand, the product of the supply V ($mm^3$/min) and the average flow time "t" (min) is divided by the average flow length G (mm) and the number of support bodies M to obtain an average sectional area S ($mm^2$). When the support bodies contact the reaction product on the surface, S is divided by the total wet width J (mm) of the support bodies perpendicular to the flow length to obtain a liquid depth.

When the support bodies are wires and contact the reaction production substantially on the line, S is assumed to be a circle and the circle equivalent radius is obtained from $S = \pi r^2$ as a liquid depth. In this method, it is possible to set the liquid depth to 50 mm or less which is suitable for the present invention by adjusting the supply and the shape, length and number of the support bodies, and the surface area is equivalent to G x J x M or $2\pi rGM$.

To form a liquid film by freely dropping the reaction product, the reaction product is extruded from a porous plate and freely dropped, or the reaction product is flown from a vessel having an non-restricted space in the upper portion and freely dropped.

In the former case, based on the idea that a dropped product having the same section as the hole of the porous plate for extruding the reaction product is obtained, the liquid depth and the surface area are calculated. For example, when the shape of the hole is circular, the radius "r" of the hole is equivalent to the liquid depth and the surface area is obtained from $2\pi rGM$ wherein M is the number of holes and G is a drop length.

In the latter case, it can be considered that the thickness of the formed liquid film is 100 mm or less and the liquid depth is 50 mm which is 1/2 of the thickness or less. The surface area of the liquid film is represented by 2MGJ wherein G is a drop length, J is the width of each liquid film and M is the number of liquid films.

This will be described in more detail with reference to Fig. 1 and Fig. 14 of the accompanying drawings.

Fig. 14 is a sectional view in an agitation axis direction of a horizontal reactor shown in Fig. 1. Reference numeral 1 denotes the shell wall of the reactor, 11 hollow disks and 13 support blades interposed between adjacent hollow disks 11 in the agitation axis direction.

In Fig. 14, the support blades 13 are placed with a small clearance between them and the shell wall 1 of the reactor, the reaction products is applied to the shell wall by the outer end faces (the shell wall side) of the support blades 13 to form a thin film, a space formed by the shell wall 1 of the reactor, a plurality of hollow disks 11 and the support blades 13 interposed between adjacent hollow disks corresponds to the vesselhaving a non-restricted space in the upper portion, and the reaction products is drawn up into the space by the rotation of the support blades and then freely dropped from the inner end faces (the center side of the reactor) of the support blades to form a thin film.

In this case, the positions of the support blades capable of forming a freely dropped liquid film may be any position between the start point of drawing up the reaction products (y - z position) and a point "f" where the support blade becomes vertical. According to the calculation of the surface area of the freely dropped liquid film of the present invention, the total (MG) of the free drop lengths when there is a support blade at the point "f" is obtained to calculate the surface area of the freely dropped liquid film.

That is, when an angle (setting angle of the support blade) formed by the support blade and a line connecting the outer end "e" of the support blade and the center "c" is represented by $\delta$, $\angle acf$ becomes $\delta + 90°$, barrel diameter of reactor ≒ outer diameter of hollow disk = D, and the drop length of the liquid film falling from the support blade at the point "f" becomes $(1/2)\cdot D\cdot \sin(\angle acf) - W\cdot \sin(\angle acf - \delta) + (1/2)\cdot d$ wherein W is the width of the support blade and d is the inner diameter of the hollow disk.

When an M number of support blades are mounted to the respective hollow disks, a plurality of ("i" number) other support blades may be existent between "a" and "f". When the point of each of the support blades is represented by $x_i$, $\angle acx_i$ becomes $\delta + 90 - 360\cdot i/M$ ($i = 1, 2, ..., \angle acx_i \geqq 0$) and the drop length of the liquid film falling from each support blade is represented by $(1/2)\cdot D\cdot \sin(\angle acx_i) - W\cdot \sin(\angle acx_i - \delta) + (1/2)\cdot d$.

In Fig. 14, eight support blades are provided. When $\delta = 45°$, i = 3, the total (MG) of the free drop lengths is 1.2D - W + 2d, and the total surface area (Af) of the freely dropped thin film is represented by 2J(1.2D - W + 2d) wherein J is the width of the support blade (length between hollow disks in Fig. 1).

The area (As) of the thin film applied to the shell wall of the reactor by the support blades is represented by $J(\pi D \cdot (360 - \angle ycz)/360)$ wherein y and z are intersections between the surface of the reaction products and the shell wall, with the proviso that $\angle ycz = 2 \cdot \cos^{-1}(d/D)$.

Since the surface area (Av) of the reaction products is represented by $J(D^2 - d^2)^{1/2}$ when the depth of the solution held in the lower portion of the reactor is larger than 50 mm, the proportion of the surface area having a liquid depth of 50 mm or less to the surface area of the polymer in the reactor can be calculated from (As + Af)/(As + Af + Av). Although the surface on which a thin film is formed may be the surface of the hollow disk or the surface of the support blade above the surface of the reaction products, the above calculation may be made by ignoring these.

In the present invention, V/S obtained by dividing the total amount (V) of the solution in the reactor by the total surface area (S) of the reaction products is not so important but the proportion of a portion for forming a thin film to the total is important. Although the reason for this is not clear, when the aromatic monohydroxy compound and the aromatic carbonic acid diester (may be referred to as "diaryl carbonate" hereinafter) formed by the ester exchange reaction are compared with each other, the molecular size of the latter is generally large. Therefore, when these ester exchange by-products are diffused in the reaction products, it is considered that the diffusion speed of the diaryl carbonate having a large molecular size is more affected by an increase in the liquid depth and becomes slower than the diffusion speed of the aromatic monohydroxy compound and that the diffusion speed is slow because the viscosity of the reaction products rises in a polymerization region where the oligomer is converted into a polycarbonate, thereby exerting an non-negligible influence upon the total ester exchange reaction rate.

That is, in order to carry out an ester exchange reaction accompanied by the elimination of the diaryl carbonate smoothly, it is important that the diaryl carbonate having a large molecular size should be moved to the surface of the solution quickly and removed to the outside of the reaction system. As the aromatic monohydroxy compound elimination reaction and the diaryl carbonate elimination reaction in a preferred ratio mainly take place at a shallow depth of the solution, it is considered that the proportion of the portion where the thin film is formed to the total is significant and not V/S representing the average depth of the solution.

An example of this reactor having excellent thin film formability is a horizontal single-shaft cylindrical reactor in which the reaction products is applied to the shell wall of the reactor by the support blades close to the shell wall of the reactor for renewal, part of the reaction products is drawn up by the support blades, and the drawn solution is dropped by gravity to form a free liquid film.

Each constituent element of this horizontal single-shaft cylindrical reactor will be detailed by giving an example. However, it is needless to say that the present invention is not limited by this.

As shown in Fig. 1, the horizontal single-shaft cylindrical reactor has an agitation blade which comprises in a cylindrical vessel constituted by an inlet end plate 5 and an outlet end plate 6 surrounded by a jacket outer wall 2 and a vessel shell wall 1, two end disks 9 and 9', a plurality of hollow disks 11 interposed between the two end disks, a plurality of support blades 13 for connecting the end disks to the hollow disks, interconnecting the hollow disks and fixing them at predetermined intervals, and two independent end rotation axes 8 and 8' fixed in the center portions of the two end disks and which does not have an actual rotation axis between a plurality of hollow disks. In this reactor, the end disks and the hollow disks are perpendicular to the virtual rotation axis of the agitating blade.

(agitating blade)

In Fig. 1, the plurality of hollow disks 11 interposed between the end disks 9 and 9' which are inclined or curved in an opposite direction to the rotation direction are interconnected and fixed at predetermined intervals by the support blades 13. The center portions of the end disks 9 and 9' are supported by the end agitating axes 8 and 8'.

In the space between the end disk and the hollow disk and the space between the hollow disks, at least one of the plurality of the support blades is in close vicinity to the shell wall of the reactor and the end portion in close vicinity to the shell wall is parallel to the shell wall. Thereby, the solution is drawn up into the space formed by the end portion and the shell wall 1 of the vessel along with agitation rotation, dropped by gravity while forming a free liquid film and applied to the gas phase portion of the shell wall 1 of the vessel by the support blades 13 for renewal.

That is, in the above spaces, the at least one support blade is preferably a plate extending in the virtual rotation axis direction of the agitating blade, more preferably has an angle of 30 to 60° with respect to the tangent of the section of the cylinder perpendicular to the virtual rotation axis of the agitating blade.

In this case, the thickness (liquid depth) of the liquid film applied to the shell wall of the vessel corresponds to the clearance between the end of the support blade and the shell wall of the vessel and the liquid depth of the free liquid film formed when the drawn solution is dropped is 50 mm or less.

Using the above structured agitating blade, the solution is drawn up into the space formed by the end of the

support blade 13 and the shell wall 1 of the vessel along with agitation rotation even when the hold up is enhanced, dropped by gravity while forming a free liquid film and applied to the gas-phase portion of the shell wall of the vessel by the support blade 13, thereby maintaining the proportion of the surface area having a liquid depth of 50 mm or less to the surface area of the reaction products at 50 % or more with the result that the ratio of the aromatic monohydroxy compound elimination reaction to the diaryl carbonate elimination reaction can be maintained at a preferred range, a high reaction rate is achieved, and a polymer having improved quality can be obtained.

Since the liquid film on the shell wall 1 of the vessel is scraped off along with the rotation of the end of the support blade 13 for renewal, a substance causing a gel, foreign matter and the deterioration of color is not formed, thereby helping the acquisition of a high-quality polymer. Further, since there is no agitation axis between the end agitation axes 8 and 8', a residence portion is not formed around the agitation axis, thereby further improving the quality of the polymer.

(end disk)

The end disk 9 preferably has a large number of openings to prevent the residence of the solution around the end plate of the reactor. As for the shape of the end disk 9, the disk is preferably a disk having a large number of openings or notches, or a hollow disk having a plurality of support plates extending from its center portion. Out of these, a notched disk having openings 10 as shown in Fig. 2 is preferred.

(support blade)

The support blade 13 may have a tail portion 14 extending in an opposite direction to the rotation direction at an end portion and keeping a small space with the shell wall 1 of the vessel as shown in Figs . 3(1), (2) and (3). The provision of the tail portion 14 has the effect of improving the application of a liquid film to the shell wall of the vessel and the drawing-up of the reaction products when the viscosity of the reaction products is low.

That is, the tail portion 14 has a shape suitable for applying the liquid film to the shell wall of the vessel and drawing up the reaction products. To fulfill the function of applying the liquid film to the shell wall of the vessel, it has a portion parallel to the shell wall of the reactor.

To carry out the polymerization of the first aromatic polycarbonate using the above device, the support blade is rotated slowly by a motor, preferably at a revolution speed of 1 to 15 rpm.

The above device may be used for the batch polymerization of an oligomer or the continuous polymerization of the oligomer.

When it is used for continuous polymerization, the solution is continuously injected from an inlet 3 shown in Fig. 1, the supplied first aromatic polycarbonate is applied to the inner surface of the side wall 5 at the inlet by a guide blade 7 for renew, drawn up by the support blade 13 or the tail portion 14 and applied to the shell wall 1 of the gas phase portion for renew. Further, the reaction products is thereby dropped while forming a film and flows into the subsequent chamber from the opening portion 12 of the hollow disk 11 and sent to a liquid outlet 4 while repeating the same function, thereby making it possible to obtain the second aromatic polycarbonate having an increased degree of polymerization from the outlet 4 of the reaction products.

Another example of the reactor having excellent thin film formability of the present invention is a horizontal twin-shaft reactor having a cocoon-like section, formed by combining two cylinders extending in parallel to each other and comprising the following structural elements:

a) a end plate at the inlet of the reactor, a end plate at the outlet of the reactor in an opposite direction to the above end plate, a first agitation blade having a plurality of agitating units extending substantially in a horizontal direction of the reactor and a second agitating blade having a plurality of agitating units placed in parallel to the first agitating blade and substantially in a horizontal direction of the reactor;
b) the first agitating blade and the second agitating blade being placed close to each other so that they mesh with each other and rotate in the same direction in synchronism with each other to apply the reaction products to their agitating units and the shell wall of the reactor in the form thin film for renew; and
c) the inlet of the reaction products provided close to the end plate at the inlet of the reactor and above the first agitation axis and the outlet of the reaction products provided at the bottom of the reactor close to the end plate at the outlet of the reactor.

The term "first agitating blade" as used herein means an agitating blade for moving the reaction products in the upper portion of the reactor in a direction far from the agitation units of the other agitation axis placed opposite by rotation.

As for the shape of the agitation unit, a structure suitable for kneading and mixing a high-viscosity substance

can be selected empirically. An example of the agitation unit is shown in Fig. 4.

The reactor having the above structure is preferably used to produce a high-molecular weight polycarbonate which cannot be produced with the foregoing horizontal single-shaft reactor. Specifying the high molecular weight, when the viscosity average molecular weight is higher than 15,000, preferably when the molecular weight is higher than 20,000 and the first aromatic polycarbonate may be directly polymerized with this horizontal twin-shaft reactor, or polymerized with a horizontal twin-shaft reactor after it is polymerized with a horizontal single-shaft reactor.

Each constituent element of this horizontal twin-shaft rector will be detailed by giving an example. It is needless to say that the present invention is not limited thereby. For example, a structure that part of the agitation axis is actually missing is also accepted.

(whole constitution)

Figs. 4, 5, 6A and 6B show a perspective view of a preferred embodiment of the horizontal twin-shaft reactor used in the present invention, a plan sectional view thereof when seen from above, and side sectional views thereof, respectively. In the following description, "agitation axis" means an actually existent agitation axis.

The horizontal twin-shaft reactor preferably used in the present invention has an end plate 105 at the inlet of the reactor, an end plate 106 at the outlet of the reactor in the opposite direction to the above end plate, a first agitation axis 102 extending substantially in a horizontal direction of the reactor, and a second agitation axis 103 placed in parallel to the first agitation axis 102 and substantially in a horizontal direction. The agitation axes are each provided with a plurality of agitation units 120, 121 and 127 placed in close vicinity to one another so that the agitation units mesh with one another and rotate in the same direction in synchronism with one another.

The shell wall 1 of the reactor keeps a narrow space with the agitation units and has a cocoon-like section formed by combining two cylinders. The inlet 111 of the reaction products is provided close to the end plate 105 at the inlet of the reactor and above the first agitation axis 102, the outlet 112 of the reaction products is provided at the bottom of the reactor close to the end plate 106 at the outlet of the reactor, and a screw 113 for extracting the reaction products is installed in the outlet of the reaction products to discharge the reaction products having an increased viscosity. The aromatic monohydroxy compound and the diaryl carbonate formed by the ester exchange reaction are discharged to the outside of the reactor through vacuum pipes 117 and 116 connected to a vent port 15. At this point, high-boiling substances entrained in by-produced vapor are collected in a distillate receiver 118 interposed between the vacuum pipes 117 and 116.

The term "first agitation axis" means an agitation axis for moving the reaction products in the upper portion of the reactor in a direction away from the agitation units placed opposite of the other agitation axis when the agitation axes are rotated in the specification of the present invention. Specifically, the agitation axis 102 corresponds to the first agitation axis in Fig. 13 and the agitation axis 103 corresponds to the first agitation axis when the rotation direction of the agitation axis is opposite to the direction shown in Fig. 13.

The agitation axes of the present invention are each provided with a plurality of agitation units shown in Figs. 7A, 7B, 9, 11A and 11B and having the functions of stirring the reaction product and forming a thin film. Agitation units

The agitation units used in the present invention have substantially a convex lens-like (spindle-shaped) section as shown in Figs. 7A, 9 and 11A. Agitation units having a strong agitation function and no solution supply function are used in a section between the inlet and the center of the reactor shown by A in Fig. 5 and Fig. 12 which is a plan view showing another preferred embodiment of the horizontal twin-shaft reactor of the present invention and agitation units having a solution supply function are preferably used in a section near the outlet of the reactor and shown by B.

Thereby, the thin film forming function of the reactor is improved by enhancing the hold up of the reaction products and the reaction products is forcedly supplied to the end plate at the outlet of the reactor to eliminate the residence portion of the reaction products which is readily formed around the end plate at the outlet of the reactor, thereby making it possible to obtain a polycarbonate having improved quality.

The agitation units used in the section A of Fig. 5 and Fig. 12 are preferably an agitation unit shown in Fig. 7A and Fig. 11A. In Fig. 7A, an agitating portion "a" has substantially a convex lens-like section and is mounted to an agitation portion "b" opposed thereto with a fixed space "c" therebetween in the agitation axis direction at a phase of 90°. The ends of the agitation units are provided with scrapers (to be referred to as "S-scrapers" hereinafter) "d" and "e", and "f" and "g" for the shell wall, respectively, which are placed in parallel to the rotation axis with a small space between them and the shell wall of the reactor and have a length slightly smaller than the installation space "c". An agitation structure constructed by integrating the agitating portions "a" and "b" having S-scrapers with each other with a predetermined space "c" kept therebetween is preferably used to facilitate the assembly of the agitation units before use. In Fig. 7A, this integrated agitation structure is denoted by 120.

The agitation units 120 are mounted to the first agitation axis and the second agitation axis in such a manner that they are shifted at a phase of 90° and the S-scrapers of the agitation units mounted to one of the agitation axes are inserted into the spaces between the S-scrapers of the agitation units mounted to the other agitation axis and the

other agitation axis with a small clearance of 50 mm or less along with the rotation of these agitation axes.

The end of each of the agitation units is mounted such that a small clearance of 50 mm or less is kept between it and the shell wall of the reactor and between it and an agitation unit opposed thereto. Thereby, the reaction products is applied to the shell wall of the reactor and the entire surface of the agitation unit in the form of a thin film for renewal, thereby making it possible to adjust the proportion of the surface area having a liquid depth of 50 mm or less to the total surface area of the polymer in the reactor to 50 % or more.

Another example of the agitation unit used in the section A of Fig. 5 and Fig. 12 is an agitation unit 128 shown in Fig. 11A.

The above agitation units have substantially a convex lens-like section and are shifted at a phase of 90° in the agitation axis direction. The agitation units mounted to the first agitation axis are shifted from the agitation units mounted to the second agitation axis at a phase of 90°.

The end of each of the agitation units is mounted such that a small clearance of 50 mm or less is kept between it and the shell wall of the reactor and between it and an agitation unit opposed thereto. Thereby, the reaction products is applied to the shell wall of the reactor and the entire surface of the agitation unit in the form of a thin film along with the rotation of the agitation axes for renewal, thereby making it possible to adjust the proportion of the surface area having a liquid depth of 50 mm or less to the total surface area of the polymer in the reactor to 50 % or more, which is a requirement for working of the present invention.

Another example of the agitation unit used in the section B of Fig. 5 and Fig. 12 is preferably an agitation unit 127 shown in Fig. 9.

The agitation unit 127 has substantially a convex lens-like section and slightly twisted top and bottom surfaces as shown in Fig. 9. When the degree of this twist is represented by $\gamma$ in Fig. 10 and $\gamma$ is in the range of 5 to 60°, the solution supply function and self cleaning function are improved advantageously. Particularly when $\gamma$ is in the range of 5 to 45°, the most excellent performance is obtained.

In the present invention, the agitation units 127 are mounted to the agitation axes in such a manner that they are shifted from one another in the agitation axis direction in a screw-like form as a whole as shown in Fig. 8. When this phase shift is represented by $\alpha$, $\alpha$ is preferably in the range of 15 to 60°, particularly preferably 30±10°.

When $\alpha$ is smaller than the above lower limit, a streak-like flow of the polymer is formed on the side surface of the agitation unit 127 and a gel or foreign matter is generated on a dry spot portion (portion not wet with the polymer).

When $\alpha$ is larger than the above upper limit, each agitation unit becomes independent without being affected by agitation units before and after it, thereby reducing the wetting of the agitation unit and generating a gel and foreign matter. Also the solution supply function is weakened whereby the amount of the reaction products to be supplied to the end plate at the outlet of the reactor is reduced and a dead space is formed around the end plate at the outlet of the reactor, thereby deteriorating the quality of the polymer.

The agitation units 127 mounted to the first agitation axis and the second agitation axis in a screw-like form as a whole as described above so as to mesh with one another and the end of each of the agitation units is mounted such that a small clearance of 50 mm or less is kept between it and the shell wall of the reactor and between it and an agitation unit opposed thereto.

Thereby, the reaction products is supplied toward the end plate at the outlet of the reactor and applied to the shell wall of the reactor and to the entire surface of the agitation unit in the form of a thin film along with the rotation of the agitation axes for renewal, thereby making it possible to adjust the proportion of the surface area having a liquid depth of 50 mm or less to the surface area of the polymer in the reactor to 50 % or more.

Out of the agitation units 120, 127 and 128 of the present invention, the agitation units mounted to both ends of the agitation axis are desirably as close to the end plates as possible.

Out of these, the agitation unit opposite to the end plate at the inlet is preferably provided with scrapers (to be referred to as "P-scrapers" hereinafter) 122 and 123 for the end plate shown in Fig. 7B and Fig. 11B.

The P-scrapers are attached to at least part of a 90 to 180° section and at least part of a 270 to 360° section of the periphery of the surface opposite to the end plate of the agitation unit in such a manner that they are point symmetrical to each other when the apices of the convex lens shape are at 0° and 180° and the rotation direction of the agitation unit is normal.

The P-scrapers have the function of forcedly flowing the reaction products at the end plate toward the agitation axes from the apices of the agitation unit along with rotation, thereby eliminating a dead space which is readily formed near the agitation axis and making it possible to produce a polycarbonate having excellent quality.

The clearance given in the above description is a value at use temperature and not a value measured when it is cold.

(inlet of reaction products)

The position for supplying the reaction products into the horizontal twin-shaft reactor of the present invention

is preferably close to the end plate at the inlet of the reactor and above the first agitation axis. Supply of the reaction products from that position makes it possible to eliminate a dead space which is readily formed at the inlet and to obtain a polycarbonate having excellent quality.

The expression "close to" means that the interval is substantially 500 mm or less, preferably 300 mm or less.

Specifying this supply position, as one example as shown by 111 in Fig. 6A, a supply port is directly formed in the end plate at the inlet of the reactor above the first agitation axis.

As another example as shown by 111 in Fig. 6B, a vent port is formed close to the end plate at the inlet and above the first agitation axis to supply the reaction products to a portion close to the end plate at the inlet from the inside thereof.

(vent port)

Preferably, the horizontal twin-shaft reactor of the present invention has a vent port 15 for removing by-products such as an aromatic monohydroxy compound and diaryl carbonate formed by an ester exchange reaction to the outside of the reactor and keeping the reactor under reduced pressure in the shell wall of the reactor above the first agitation axis.

As for the size of the vent port formed in the shell wall of the reactor, the inner diameter of the vent port is preferably 1.15 times or more, more preferably 1.15 to 2.5 times the size of the agitation unit including the S-scrapers seen from above the vent port when one agitation unit passes by. With this size, a phenomenon called "vent-up" that the liquid film of the reaction products formed by the agitation units is scattered to the outside of the system from the vent port can be prevented, whereby a polycarbonate having excellent quality can be produced stably for a long time.

Fig. 15 is a plan view showing details of the vent port. The vent port 15 is formed in the shell wall 1 above the first agitation axis 102 and the inner diameter X of the vent port is preferably 1.15 times or more the length Y of the agitation unit including S-scrapers passing by the vent portion.

(agitation axis)

It is preferred that spiral grooves should be formed in the agitation axis of the horizontal reactor (both single-shaft and twin-shaft) of the present invention from the end plates to bearings to prevent the reaction products from entering the sleeves 107, 108, 109 and 110 of the agitation axes or to discharge the entered reaction products to the outside of the system without returning it to the inside of the reactor.

Fig. 5 shows this typically and portions where the spiral grooves are formed from the end plates of the agitation axes to the bearings are denoted by 124 and 125. Out of these, 125 denotes agitation axes having a spiral groove for returning the polymer entered by the rotation of the agitation axes to the inside of the reactor.

124 denotes agitation axes having a spiral groove which serves to supply the polymer entered by the rotation of the agitation axes toward the bearings. Fig. 6 shows that entered polymer discharge ports 126 are formed in the sleeves of the agitation axes corresponding to positions where the grooves 124 for supplying the polymer toward the bearings and the grooves 125 for returning the polymer to the inside of the reactor intersect each other so that the entered reaction products is discharged to the outside of the system from the discharge ports.

The above grooves are formed in the bearing portions of the agitation axes to suppress the formation of a polymer deteriorated product, thereby making it possible to obtain a polycarbonate having excellent quality.

In the present invention, the material of the reactor having excellent thin film formability is not particularly limited and a general material may be used but the inner surface in contact with the reaction products of the reactor is preferably made from a material having a low iron content, such as stainless steel or nickel.

In the step (2), the first aromatic polycarbonate is polymerized in the above reactor having excellent thin film formability at a temperature of 200 to 350°C and a pressure of 1,330 Pa (10 mmHg) or less, preferably 250 to 320°C and 665 Pa (5 mmHg) or less.

According to the step (2), there is formed the second aromatic polycarbonate having a viscosity average molecular weight of 10,000 or more and higher than the viscosity average molecular weight of the first aromatic polycarbonate and a lower terminal hydroxy group content based on the total of all the terminal groups than the terminal hydroxyl group content of the first aromatic polycarbonate.

Preferably, the above second aromatic polycarbonate has a viscosity average molecular weight of 10,000 to 100,000 and an OH terminal content of 35 mol% or less based on the total of all the terminal groups. Further, the second aromatic polycarbonate preferably contains not more than 500 ppm of the aromatic monohydroxy compound and no more than 500 ppm of the aromatic carbonic acid diester. Therefore, by devolatizing the second aromatic polycarbonate, the contents of the aromatic monohydroxy compound and the aromatic carbonic acid diester can be reduced to 200 ppm or less, respectively. Further, the second aromatic polycarbonate is preferably a high-quality polycarbonate which contains 50,000 or less foreign substances having a particle diameter of 0.5 μm or more per g and

has a change in foreign matter content of +20 % or less and a change in viscosity average molecular weight of ±2 % or less.

Since this polycarbonate has excellent color and excellent durability due to a low content of terminal OH as well as excellent impact resistance and precision moldability due to a low content of foreign matter, it is used for applications such as sheets and injection moldings.

Particularly, a high-quality polycarbonate having a viscosity average molecular weight of 10,000 to 18,000, an OH terminal content of 35 mol% or less based on the total of all the terminal groups, a change in foreign matter content of +10 % or less and a change in viscosity average molecular weight of ±1 % or less and containing 10,000 or less foreign substances having a particle diameter of 0.5 μm or more per g is advantageously used in optical recording media.

Further, it has been found that the polycarbonate obtained in the present invention has unexpected characteristic properties. That is, it has been discovered that when a disk substrate is continuously molded from the polycarbonate of the present invention, the contamination of a mold is reduced, the cycle of cleaning the mold can be greatly extended, and the generation of a cloud is greatly suppressed.

Although the reason for this is not clear, it is assumed that unexpected effects are obtained by the subtle change of the polycarbonate itself or the subtle change of interaction between the polycarbonate and additives due to the change of trace impurities including the oligomer contained in the polycarbonate caused by controlling the ester exchange reaction.

The polycarbonate thus obtained in the present invention may contain an organic sulfonic acid compound (b) and additives (c) such as a phosphorus compound, heat resistant stabilizer, release agent, processing stabilizer, antioxidant, optical stabilizer, ultraviolet light absorber, metal inactivating agent, metal soap, nucleating agent, antistatic agent, flame retardant, mildew-proofing agent, colorant, anti-fogging agent, natural oil, synthetic oil and wax.

The sulfonic acid compound (b) is preferably a sulfonic acid compound represented by the following formula (II):

$$A_2\text{-}SO_3X^1 \qquad (II)$$

wherein $A_2$ is a hydrocarbon group having 1 to 20 carbon atoms which may have a substituent and $X^1$ is an ammonium cation or phosphonium cation.

By adding this, the activity of an alkali metal or alkaline earth metal compound used for melt polycondensation can be reduced or deactivated, thereby making it possible to obtain a polycarbonate having excellent quality such as color, heat resistance and hydrolytic resistance.

The sulfonic acid compound (b) is particularly preferably a sulfonic acid phosphonium salt represented by the following formula (III) because its effect is large:

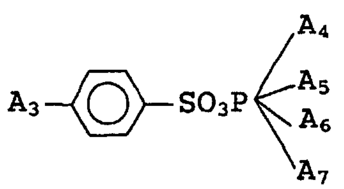

···(III)

wherein $A_3$, $A_4$, $A_5$, $A_6$ and $A_7$ are each independently a monovalent hydrocarbon group having 1 to 20 carbon atoms.

The sulfonic acid compound (b) functions as a deactivator for an ester exchange catalyst used for the production of a polycarbonate and improves the heat stability of the polymer.

Known catalyst deactivators disclosed by JP-A 8-59975 are effectively used as the sulfonic acid compound (b). Out of these, ammonium salts of sulfonic acid and phosphonium salts of sulfonic acid are preferred. Further, ammonium salts and phosphonium salts of dodecylbenzenesulfonic acid, ammonium salts and phosphonium salts of paratoluenesulfonic acid, and ammonium salts and phosphonium salts of benzenesulfonic acid are also preferably used.

Out of these, tetrabutylphosphonium dodecylbenzenesulfonate and tetrabutylammonium paratoluenesulfonate are particularly preferred in the present invention because their effects are excellent.

The catalyst deactivator is used to greatly reduce the activity of a catalyst and may be added to a polycarbonate alone or may be added to a polycarbonate resin as a mixed solution of it and water.

The amount of the catalyst deactivator which is the sulfonic acid compound (b) to be added to the polycarbonate obtained by melt polycondensation is 0.5 to 50 mols, preferably 0.5 to 10 mols, more preferably 0.8 to 5 mols based on 1 mol of the main polycondensation catalyst selected from an alkali metal compound and an alkaline earth metal compound. In other words, it is used in an amount of 0.1 to 500 ppm based on the polycarbonate.

The phosphorus compound used as an additive (c) is phosphoric acid, phosphorous acid, hypophosphorous acid, pyrophosphoric acid, polyphosphoric acid, phosphoric acid ester or phosphorous acid ester.

Examples of the phosphoric acid ester include trialkyl phosphates such as trimethyl phosphate, triethyl phosphate, tributyl phosphate, trioctyl phosphate, tridecyl phosphate, trioctadecyl phosphate and distearyl pentaerythrityl diphosphate, tricycloalkyl phosphates such as tricyclohexyl phosphate, and triaryl phosphates such as triphenyl phosphate, tricresyl phosphate, tris(nonylphenyl)phosphate and 2-ethylphenyldiphenyl phosphate.

The phosphorous acid ester is a compound represented by the following formula (IV):

$$P(OR)_3 \qquad (IV)$$

wherein R is an aliphatic hydrocarbon group, alicyclic hydrocarbon group or aromatic hydrocarbon group, with the proviso that three R's may be the same or different.

Examples of the compound represented by the above formula (IV) include trialkyl phosphites such as trimethyl phosphite, triethyl phosphite, tributyl phosphite, trioctyl phosphite, tris(2-ethylhexyl)phosphite, trinonyl phosphite, tridecyl phosphite, trioctadecyl phosphite and tristearyl phosphite, tricycloalkyl phosphites such as tricyclohexyl phosphite, triaryl phosphites such as triphenyl phosphite, tricresyl phosphite, tris(ethylphenyl)phosphite, tris(2,4-di-t-butylphenyl)phosphite, tris(nonylphenyl)phosphite and tris(hydroxyphenyl)phosphite, and arylalkyl phosphites such as phenyldidecyl phosphite, diphenyldecyl phosphite, diphenylisooctyl phosphite, phenylisooctyl phosphite and 2-ethylhexyldiphenyl phosphite. Further, distearyl pentaerythrityl diphosphite and bis(2,4-di-t-butylphenyl)pentaerythrityl diphosphite may also be used as the phosphorous acid ester.

These compounds may be used alone or in combination. Out of these, phosphoric acid, phosphorous acid and esters thereof are preferred, phosphorous acid esters represented by the above formula (IV) are more preferred, and aromatic phosphorous acid esters are particularly preferred as the phosphorus compound.

The phosphorus compound in the present invention may be added in an amount of 0.0001 to 0.1 part by weight, preferably 0.001 to 0.05 part by weight based on 100 parts by weight of the polycarbonate. Outside the above range, a satisfactory effect may not be developed by adding the phosphorus compound or a bad influence may be exerted upon the quality of the polymer disadvantageously.

The release agent which can be used in the present invention is, for example, an ester compound of an aliphatic alcohol and an aliphatic carboxylic acid. Examples of the aliphatic alcohol include ethylene glycol, glycerin, trimethylolpropane, neopentyl glycol and pentaerythritol. Examples of the aliphatic carboxylic acid include lauric acid, dodecylic acid, pentadecylic acid, palmitic acid, heptadecylic acid, stearic acid, nonadecanoic acid, arachic acid, behenic acid and lignoceric acid.

Out of these, a partial ester or complete ester of glycerin or pentaerythritol as an aliphatic alcohol and stearic acid as an aliphatic carboxylic acid is particularly preferred.

The ester of an aliphatic alcohol and an aliphatic carboxylic acid is preferably added and kneaded while the aromatic polycarbonate of the present invention is molten. The kneaded product is desirably filtered with a filter, for example, a filter having a nominal filtration accuracy of 1 to 50 μm while it is molten.

The ester compound of an aliphatic alcohol and an aliphatic carboxylic acid used in the present invention may be added in an amount of 0.001 to 1 part by weight, preferably 0.01 to 0.5 part by weight based on 100 parts by weight of the polycarbonate. Outside the above range, the effect of improving releasability may not be developed to the full or a bad influence may be exerted upon the quality of the polymer disadvantageously.

Examples of the processing stabilizer include 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate.

Examples of the optical stabilizer include ultraviolet light absorbers such as benzotriazole-based compounds including 2-(3-t-butyl-2-hydroxy-5-methylphenyl)-5-chlorobenzotriazole, 2-(3,5-di-t-butyl-2-hydroxyphenyl)benzotriazole, 2-(2-hydroxy-5-methylphenyl)benzotriazole, 2-(2-hydroxy-5-t-octylphenyl)benzotriazole, 2-(3,5-di-t-pentyl-2-hydroxyphenyl)benzotriazole, 2-[2-hydroxy-3-(3,4,5,6-tetrahydrophthalimidemethyl) phenyl]benzotriazole and 2-[2-hydroxy-3,5-bis(α,α-dimethylbenzyl)phenyl] benzotriazole; benzophenone-based compounds including 2-hydroxy-4-octyloxybenzophenone and 2-hydroxy-4-methoxybenzophenone; hydroxybenzophenone-based compounds including 2,4-di-t-butylphenyl and 3,5-di-t-butyl-4-hydroxybenzoate; and cyanoacrylate-based compounds including ethyl-2-cyano-3,3-diphenyl acrylate, and nickel-based quenchers such as nickel dibutyldithiocarbamate and [2,2'-thiobis(4-t-octylphenolate)]-2-ethylhexylamine nickel.

Examples of the metal inactivating agent include N,N'-[3-(3,5-di-t-butyl-4-hydroxyphenyl)propionyl] hydrazine,

and examples of the metal soap include calcium stearate and nickel stearate.

Examples of the nucleating agent include sorbitol-based and phosphate-based compounds such as sodium di(4-t-butylphenyl)phosphonate, dibenzylidene sorbitol and methylenebis(2,4-di-t-butylphenol)acid phosphate sodium salt.

Examples of the antistatic agent include quaternary ammonium salt- and alkylphosphate-based compounds such as (β-lauramidepropyl)trimethylammonium methyl sulfate, and examples of the flame retardant include halogen-containing phosphates such as tris(2-chloroethyl)phosphate, halides such as hexabromocyclododecane and decabromophenyl oxide, metal inorganic compounds such as antimony trioxide, antimony pentaoxide and aluminum hydroxide, and mixtures thereof.

The method of adding the above sulfonic acid compound (b) and additives (c) to the polycarbonate of the present invention is not particularly limited and the order of blending these components is arbitrary. For example, the additives including a phosphorus compound (c) and/or the sulfonic acid compound (b) may be added to and kneaded with a molten polycarbonate, or may be added to and kneaded with a polycarbonate solution.

More specifically, the additives including a phosphorus compound (c) and/or the sulfonic acid compound (b) are directly added to and kneaded with the polycarbonate which is the reaction product in a reactor or extruder in a molten state obtained after the end of a polymerization reaction separately or simultaneously, or the obtained polycarbonate is pelletized and supplied into a single-shaft or twin-shaft extruder together with the additives including a phosphorus compound (c) and/or the sulfonic acid compound (b) to be melt kneaded together, or the obtained polycarbonate is dissolved in a suitable solvent (such as methylene chloride, chloroform, toluene or tetrahydrofuran) and the additives (c) and/or the sulfonic acid compound (b) are added to the resulting solution separately or simultaneously and stirred.

In order to reduce the heat history time of the polycarbonate in a molten state and the number of times of remelting the polycarbonate, it is preferred to add and knead the additives including a phosphorus compound (c) and the sulfonic acid compound (b) with the molten polycarbonate obtained by melt polycondensation and then pelletize the obtained product. It is particularly preferred to filter the kneaded product with a filter before it is pelletized. The filter preferably has a nominal filtration accuracy of 1 to 50 μm.

The sulfonic acid compound (b) and the additives including a phosphorus compound (c) to be supplied to a kneading device such as a reactor or twin-shaft extruder may be molten, dissolved in a suitable solvent as a solution, dispersed as an emulsion, dispersed in a polycarbonate as a master powder material, or a master polymer for the polycarbonate. Further, to prepare a composition comprising an inorganic filler and a resin other than the polycarbonate which will be described hereinafter, a master powder material or master polymer comprising the inorganic filler and the resin as media may be used.

These additives may be supplied by known quantitative supply means according to their forms. For example, in the case of a liquid such as a molten liquid or solution, a plunger pump, diaphragm pump or gear pump may be used and in the case of a solid such as a master powder, a combination of a quantitative feeder and a side feeder may be preferably used.

In the present invention, the polycarbonate is preferably vacuum treated. The device used for the vacuum treatment is not particularly limited but a reactor equipped with a decompressor and an extruder equipped with a decompressor may be used.

The reactor equipped with a decompressor may be either a vertical tank reactor or a horizontal tank reactor but a horizontal tank reactor is preferred. The extruder equipped with a decompressor may be either a vented single-shaft extruder or twin-shaft extruder. Pelletization can be carried out by the extruder during vacuum treatment.

The pressure for the vacuum treatment is preferably 0.05 to 750 mmHg (6.7 to 100,000 Pa), particularly preferably 0.05 to 50 mmHg (6.7 to 6,700 Pa) when a reactor is used and preferably 1 to 750 mmHg (133 to 100,000 Pa), particularly preferably 5 to 700 mmHg (670 to 9,300 Pa) when an extruder is used.

The vacuum treatment is preferably carried out at a temperature of 240 to 350°C for 5 minutes to 3 hours when a reactor is used and for 10 seconds to 15 minutes when an extruder is used.

The timing of vacuum treating the polycarbonate is not particularly limited. However, when the vacuum treatment is carried out while the activity of the ester exchange catalyst is retained, the degree of polymerization may change or the polymer may deteriorate. Therefore, the vacuum treatment is preferably carried out after or simultaneously with the addition and kneading of the sulfonic acid compound (b).

To add the additives (c), the timing of the vacuum treatment is preferably set according to the boiling point of each additive so that the added additives can remain in the polymer.

When the vacuum treatment is thus made on the polycarbonate, a polycarbonate having reduced contents of the residual monomer and oligomer can be obtained. The vacuum treatment may be carried out as required after water, saturated aliphatic hydrocarbon or nitrogen is pressure kneaded to reduce the contents of the residual monomer and oligomer.

For instance, when melt polycondensation is carried out using diphenyl carbonate as the carbonic acid diester, the contents of the residual diphenyl carbonate and phenol in the polycarbonate can be reduced by the vacuum treatment.

Since the contents of the above diaryl carbonate and aromatic monohydroxy compound (amounts of the residues) in the polycarbonate of the present invention are preferably 200 ppm or less by weight as described above, the above vacuum treatment is effective.

Sheets can be produced from the aromatic polycarbonate produced in the present invention. It has been found that the sheets have flame retardancy and antistatic properties and unexpectedly excellent adhesion and printability. The reason for this is not made clear but it is possible that the difference between the ester exchange reactions may exert an influence upon the characteristic properties.

The sheets, using its characteristic property, are widely used in electric parts, building material parts and auto parts, specifically useful for optical applications such as various window materials, that is, grazing products for window materials for general houses, gyms, baseball domes and vehicles (such as construction machinery, automobiles, buses, bullet trains and tramcars), various side wall panels (such as sky domes, top lights, arcades, wainscots for condominiums and side panels on roads), window materials for vehicles, displays and touch panels for OA equipment, membrane switches, photo covers, polycarbonate resin laminate panels for water tanks, front panels and Fresnel lenses for projection TVs and plasma displays, optical cards, liquid crystal cells consisting of an optical disk and a polarizer, and phase difference compensators.

The thickness of the aromatic polycarbonate sheet does not need to be particularly limited but it is generally 0.1 to 10 mm, preferably 0.2 to 8 mm, particularly preferably 0.2 to 3 mm. Various treatments for providing new functions (such as a lamination treatment for improving weatherability, a treatment for improving scratch resistance to increase surface hardness, surface drawing and processing for making translucent or opaque) may be carried out on the aromatic polycarbonate sheet.

In the present invention, a composition can be obtained by adding and kneading a filler, preferably an inorganic filler (B) and/or a resin (C) other than the polycarbonate with the thus obtained polycarbonate which contains or does not contain the sulfonic acid compound (b) and/or other additives (c).

The thus obtained polycarbonate composition has excellent color and moldability and provides moldings having excellent mechanical strength, reflecting the characteristic features of the polycarbonate used as the base of the composition such as excellent color, a low content of foreign matter and high uniformity in molecular weight compared with a polycarbonate obtained by the conventional ester exchange method.

Examples of the inorganic filler (B) include lamellar and granular inorganic fillers such as talc, mica, silica, alumina, clay, glass flake, glass bead, calcium carbonate and titanium oxide, and fibrous fillers such as glass fiber, glass milled fiber, wollastonite, carbon fiber and metal-based conductive fiber. Organic fillers such as aramide fiber, crosslinked acryl particle and crosslinked silicone particle may also be used.

The amount of the inorganic or organic filler is preferably 1 to 150 parts by weight, more preferably 3 to 100 parts by weight based on 100 parts by weight of the polycarbonate of the present invention.

The above inorganic and organic fillers usable in the present invention may be surface treated with a silane coupling agent. A favorable effect such as the suppression of the decomposition of the polycarbonate is obtained from this surface treatment.

Examples of the resin (C) other than the polycarbonate used in the composition of the present invention include polyamide resins, polyimide resins, polyether imide resins, polyurethane resins, polyphenylene ether resins, polyphenylene sulfide resins, polysulfone resins, polyolefin resins such as polyethylene, polypropylene and polybutadiene, polyester resins such as polyethylene terephthalate and polytetramethylene terephthalate, amorphous polyarylate resins, polystyrene resins, HIPS (high impact strength polystyrene), acrylonitrile/styrene copolymer (AS resin), acrylonitrile/butadiene/styrene copolymer (ABS resin), polymethacrylate resins, phenol resins and epoxy resins. Out of these, ABS resin, polyester resins such as polyethylene terephthalate and polytetramethylene terephthalate, polypropylene, AS resin, HIPS and polybutadiene are preferred, and ABS resin and polyester resins are particularly preferred.

In the present invention, the amount of the resin (C) other than the polycarbonate is preferably 1 to 10,000 parts by weight, more preferably 10 to 1,000 parts by weight, the most preferably 10 to 100 parts by weight based on 100 parts by weight of the polycarbonate of the present invention.

The method of obtaining the composition of the present invention is not particularly limited and known kneading methods and devices may be used. A twin-shaft extruder having a plurality of supply ports is preferably used.

When a twin-shaft extruder is used, the polycarbonate of the present invention may be supplied into the extruder in a solid state such as a pellet or powder to be molten and kneaded with the inorganic filler (B) and the resin (C) other than the polycarbonate of the present invention. Alternatively, after the molten polycarbonate of the present invention obtained by polymerization is mixed with the sulfonic acid compound (b) and other additives (c) and vacuum treated as required, it may be directly supplied into the extruder in a molten state without being solidified to be kneaded with the inorganic filler (B) and the resin (C) other than the polycarbonate of the present invention. Out of these, the latter method is preferred to reduce the heat history.

When a twin-shaft extruder is used, the inorganic filler (B) is preferably supplied into the molten resin from a downstream side of a supply portion for the polycarbonate or the resin other than the polycarbonate. This can prevent contact between the inorganic filler and the extruder segment in a dry state, thereby making it possible to reduce the undesired powdering of the inorganic filler and the abrasion of the segment.
As for the supply of the inorganic filler (B), a predetermined amount of the inorganic filler (B) is preferably supplied by using a side feeder installed on a downstream side of the polycarbonate supply portion while the supply is controlled by a quantitative feeder.
The resin (C) other than the polycarbonate of the present invention may be supplied from any position, an upstream or downstream side of the supply position of the polycarbonate of the present invention, or simultaneous with the polycarbonate of the present invention. It may be supplied in a solid state directly or supplied into another extruder to be molded and then into an extruder for the preparation of a polycarbonate composition.
The former is generally employed in most cases to reduce heat history and simplify equipment. For example, the resin (C) continuously metered by a quantitative feeder is directly supplied into an extruder for the preparation of a composition, or the resin (C) continuously metered is supplied into an extruder for the preparation of a composition by a side feeder.
In the present invention, the kneading temperature differs according to the type of the resin (C) other than the polycarbonate but it is generally 200 to 380° C. The supply portion may be sealed up with an inert gas such as nitrogen to prevent the entry of oxygen and water or the kneaded composition may be vacuum treated as required.
Although the polycarbonate of the present invention which contains or does not contain the sulfonic acid compound (b) and additives (c) is preferably used for the preparation of the composition, the above sulfonic acid compound (b) and additives (c) may be further added to the obtained composition as required in accordance with the above addition method.
Molded articles which are satisfactory in terms of flame retardancy, antistatic properties, dust adhesion preventing properties, durability and stability can be obtained from the polycarbonate composition produced in the present invention by injection molding.
As described above, according to the present invention, in the method of producing a polycarbonate by carrying out a melt polycondensation reaction between an aromatic dihydroxy compound and an aromatic carbonic acid diester, a specific oligomer is polycondensed using a reactor having excellent thin film formability by controlling the ratio of an ester exchange reaction accompanied by the elimination of an aromatic monohydroxy compound and an ester exchange reaction accompanied by the elimination of a diaryl carbonate to a preferred range, both compound formed in the step of polymerizing the oligomer to obtain a polymer, whereby a polycarbonate having a low content of an OH terminal group can be obtained in a short period of reaction time.
The thus obtained polycarbonate has excellent color, a low content of foreign matter and little quality variation and is preferably used to form high-precision molded articles including optical products. A composition comprising the polycarbonate, another resin and an inorganic substance has excellent mechanical properties and moldability, reflecting the improved characteristic properties of the polycarbonate and can be preferably used for various molding applications.

Examples

The following examples and comparative examples are provided for the purpose of further illustrating the present invention but are in no way to be taken as limiting.
The following methods were used to analyze the following properties.

color:

The color b was measured with the Color and Color Difference Meter ND-1001DP of Nippon Denshoku Kogyo Co., Ltd. proportion of terminal group:
The proportion (%) of an OH terminal group to the total of all the terminal groups was obtained by an NMR measurement method.

intrinsic viscosity and viscosity average molecular weight:

The intrinsic viscosity was measured in a methylene chloride solution having a concentration of 0.7 g/dl with an Ubbellohde viscometer to obtain viscosity average molecular weight based on the following expression.

$$[\eta] = 1.23 \times 10^{-4} \times M^{0.83}$$

content of foreign substances having a particle diameter of 0.5 μm or more:

40 g of a pellet was dissolved in 2 liters of methylene chloride and the number of foreign substances was counted by a light scattering/shading method. The number of foreign substances per g was calculated from the measurement value. method of measuring diphenyl carbonate (DPC) and phenol (PhOH) contained in by-product polymerized:

0.5 g of a sample was dissolved in 10 ml of acetone to prepare a solution. The amounts of DPC and PhOH were determined by gas chromatography (G5000A of Hitachi, Ltd.) using a capillary column for DPC (DB-1 60 m, ID 0.25, Film 0.25 μ) and a packed column for PhOH (1 m x 3 mm-diameter glass column, PEG20M TPA Uniport 5 % 80/100 mesh).

method of measuring DPC and phenol in a polymer:

1 g of a sample was dissolved in 10 ml of methylene chloride and the obtained solution was mixed with 90 ml of acetonitrile to reprecipitate and separate a polymer by filtration. The filtrate was concentrated, methylene chloride was removed from the concentrated filtrate to prepare a solution, and the amounts of DPC and phenol contained in the filtrate were determined by liquid chromatography (SC8020 of Toso Corporation).

releasability:

A CD mold was set in the DISK3 M III injection molding machine of Sumitomo Heavy Industries, Ltd., a nickel CD stamper having a pit was mounted to this mold, and a molding material was injected into the hopper of the molding machine automatically to carry out continuous molding at a cylinder temperature of 320°C and a mold temperature of 65°C. After the start of continuous molding, the number of molded products obtained until continuously molding was interrupted by the occurrence of abnormal release was counted.

cloud:

A CD mold was set in the DISK3 M III injection molding machine of Sumitomo Heavy Industries, Ltd., a nickel CD stamper having a pit was mounted to this mold, and a molding material was injected into the hopper of the molding machine automatically to carry out continuous molding at a cylinder temperature of 320°C and a mold temperature of 65°C. After the start of continuous molding, a cloud was checked visually, the number of cloudy defective substrates produced increased, and the number of molded products obtained until the proportion of the number of defective substrates to 100 substrates exceeded 5 % was counted.

Example 1

(production of polycarbonate)

0.70 k-mol of powdery bisphenol A (BPA) and 0.722 k-mol of liquid diphenyl carbonate (DPC) were continuously fed to a raw material preparation tank and molten at 140°C, and this mixed solution was continuously supplied into a first polymerizer at a rate of 0.16 k-mol of bisphenol A per hour through a pleat filer having a filter layer made of SUS316 metal fibers and a nominal filtration accuracy of 0.5 μm. A catalyst solution separately prepared by dissolving bisphenol A disodium salt and tetramethylammonium hydroxide in PhOH/water (weight ratio of 90/10) was continuously supplied from a line for supplying the raw materials into the first polymerizer to ensure that the amount of the bisphenol A disodium salt should become 1 x $10^{-6}$ equivalent and the amount of the tetramethylammonium hydroxide should become 100 x $10^{-6}$ mol based on 1 mol of bisphenol A, mixed with the raw materials and supplied into the first polymerizer.

The first polymerizer was operated at a temperature of 220°C and a pressure of 100 Torr (13,300 Pa) and provided with a fractionating column and stirrer for separating phenol and DPC generated from the first polymerizer from each other and returning DPC to the first polymerizer.

The reaction products of the first polymerizer was continuously extracted from the bottom portion by a gear pump and supplied into a second polymerizer. The second polymerizer was operated at a temperature of 260°C and a pressure of 15 Torr (1,995 Pa) and provided with a fractionating column and stirrer for separating phenol and DPC generated from the second polymerizer from each other and returning DPC to the second polymerizer.

Thus, a first aromatic polycarbonate having a viscosity average molecular weight of 6,000 and an OH terminal content of 34.3 mol% based on the total of all the terminal groups was continuously obtained from the second polymerizer and continuously extracted from the bottom portion of the second polymerizer by a gear pump and supplied into

a third polymerizer.

The third polymerizer was a horizontal single-shaft reactor shown in Fig. 1 having the inlet 3 of the reaction products for receiving the first aromatic polycarbonate extracted from the second polymerizer, the outlet 4 of the reaction products of the third polymerizer, a vent port 15 for removing low-boiling substances mainly consisting of phenol and DPC formed by the reaction and for keeping the reactor under reduced pressure, and an agitation blade having such a structure that a plurality of hollow disks 11 interposed between end disks 9 and 9' shown in Fig. 1 are interconnected and fixed at predetermined intervals by support blades 13 inclined in a direction opposite to the rotation direction and the center portions of the end disks 9 and 9' are supported by end agitation axes 8 and 8'. The outer diameter D of the hollow disks constituting the agitation blade was 800 mm, the inner diameter d of the hollow disks was 325 mm, the setting angle δ of the support blades was 45°, the width W of the support blades was 170 mm, the number of support blades was 8, and the clearance between the outer ends of the support blades and the shell wall of the reactor was 20 mm.

As a result, the proportion of the surface area having a liquid depth of 50 mm or less to the surface area of the polymer in the third polymerizer was 86 %. When the ester exchange of the first aromatic polycarbonate was further carried out by maintaining the third polymerizer at a temperature of 270°C and a pressure of 1 Torr (133 Pa), a second aromatic polycarbonate having a viscosity average molecular weight of 15,200 and an OH terminal content of 25.5 mol% based on the total of all the terminal groups and containing 960 foreign substances having a particle diameter of 0.5 μm or more per g was continuously obtained. When this second aromatic polycarbonate was pelletized to measure its color, its b value was -0.5 which was extremely excellent.

When the molar ratio of PhOH to DPC contained in vapor generated from the third polymerizer was measured, it was 1:0.3 which means that the ester exchange reaction accompanied by the elimination of phenol and the ester exchange reaction accompanied by the elimination of DPC took place in a ratio of 1:0.3.

post-processing and moldability evaluation of polycarbonate:

The polycarbonate obtained from the third polymerizer was introduced into a vented twin-shaft extruder in a molten state through a pipe without contacting air to carry out post-processing consisting of the deactivation of the polymerization catalyst, the removal of low-boiling substances contained in the polymer and the addition of additives.

The used vented twin-shaft extruder was an intermeshing twin-shaft extruder having 5 processing zones each consisting of a kneading portion and a vent portion.

In the first processing zone of the extruder, tetrabutylphosphonium dodecylbenzenesulfonate dispersed in water was continuously supplied into the kneading portion using a diaphragm quantitative pump to ensure that the amount of the dispersion should become 1 wt% based on the polymer and the amount of the tetrabutylphosphonium dodecylbenzenesulfonate should become 2 times the equivalent of the bisphenol A disodium salt used as a polymerization catalyst so as to deactivate the polymerization catalyst and then the polymer was vacuum treated in the vent portion right after the kneading portion at 15 Torr (1,995 Pa) through a material seal to remove phenol and DPC contained in the polycarbonate together with water used as a solvent for the deactivator.

In the second, third and fourth processing zones, 1 wt% based on the polymer of water was continuously supplied into the kneading portions thereof using diaphragm quantitative pumps and then the polymer was vacuum treated in the vent portions right after the kneading portions through a material seal at 15 Torr (1,995 Pa) to remove phenol and DPC contained in the polycarbonate together with water.

In the fifth processing zone, 500 ppm based on the polymer of monoglyceride stearate as a release agent and 100 ppm based on the polymer of tris(2,4-di-t-butylphenyl)phosphite as a thermal stabilizer were continuously supplied into the kneading portion in a molten state using a quantitative pump and then the polymer was vacuum treated at 15 Torr in the vent portion.

The polycarbonate mixed with additives was extruded from the extruder, filtered with a polymer filter having an opening size of 20 μm after the pressure was raised by a gear pump, andpelletized through a die. When the contents of low-boiling components in the obtained polycarbonate were measured, the polycarbonate contained 20 ppm of phenol and 80 ppm of DPC and had the same color b value and the same number of foreign substances having a particle diameter of 0.5 μm or more as the values measured at the outlet of the third polymerizer, a viscosity average molecular weight of 15,100 and an OH terminal content of 25.6 mol% which were almost the same as the values measured at the outlet of the third polymerizer. evaluation of moldability:

The disk moldability of the thus obtained pellet was evaluated.

The number of molded products obtained until a release failure occurred was 354,600 and the number of molded products used as a cloud index was 317,800 which was excellent.

Example 2

(production of polycarbonate)

Polymerization was carried out in the same manner as in Example 1 and a polycarbonate having a viscosity average molecular weight of 15,200 obtained from the third polymerizer was supplied into the fourth polymerizer to be further polymerized.

The fourth polymerizer was a horizontal twin-shaft reactor shown in Fig. 4 (perspective view), Fig. 5 (plan view), Fig. 6A (side view) and Fig. 13 (sectional view) and had the inlet 111 of the reaction products in an end plate 105 at the inlet of the reactor above a first agitation axis 102, the outlet 112 of the reaction products in a bottom portion of the reactor near an end plate 106 at the outlet of the reactor, and a vent port 15 for removing low-boiling substances mainly consisting of phenol and DPC formed by a reaction and for keeping the inside of the reaction system under reduced pressure. The clearance between agitation units mounted to the first agitation axis and the second agitation axis and the clearance between the agitation units and the shell wall of the reactor were both 10 mm, and the agitation units mounted to the first agitation axis and the second agitation axis were arranged such that they meshed with each other and rotated in the same direction in synchronism with each other at 10 rpm.

The agitation units shown by A in Fig. 5 on an upstream side of the reactor had substantially a convex lens-like section as shown in Fig. 13, scrapers for the shell wall of the reactor shown by d, e, f and g in Fig. 7A were attached to the ends of the agitation units in parallel to the agitation axes at a length of 10 mm which was shorter than the mounting intervals "c" of the agitation units, and the agitation units were shifted from each other at a phase of 90°, whereby the agitation units did not have the function of transporting the reaction products.

The agitation units on a downstream side of the reactor shown by B in Fig. 5 were not provided with scrapers for the shell wall of the reactor as shown in Fig. 9 and Fig. 10, had a convex lens-like section and were given a twist angle $\gamma$ of 30° and a phase angle of 30° to be substantially shaped like a screw, whereby the agitation units had the function of transporting the reaction products toward the end plate at the outlet of the reactor.

Although this reactor had a small reaction products pool at the end of each agitation unit, it did not have a distinct liquid surface unlike a single-shaft reactor. Therefore, the reaction products film formed on the entire surfaces of the agitation units and the shell wall of the reactor was substantially equivalent to the total surface of the reaction products and it was therefore considered that the proportion of the surface area having a liquid depth of 50 mm or less was substantially 100 %.

Spiral grooves for returning the reaction products entering bearings to the inside of the reactor along with the rotation of the agitation axes were formed in the agitation axes from the inside chamber of the reactor to the bearings of the agitation axes.

When ester exchange was carried out by maintaining the fourth polymerizer at a temperature of 285°C and a pressure of 0.8 Torr (106 Pa), a polycarbonate having a viscosity average molecular weight of 24,000 and an OH terminal content of 18.8 mol% based on the total of all the terminal groups and containing 2,130 foreign substances having a particle diameter of 0.5 µm or more per g was continuously obtained. When this polycarbonate was pelletized to measure its color, its color b value was -0.1 which was extremely excellent.

When the molar ratio of PhOH to DPC contained in vapor generated from the fourth polymerizer was measured, it was 1:0.44 which means that the ester exchange reaction accompanied by the elimination of phenol and the ester exchange reaction accompanied by the elimination of DPC occurred in a ratio of 1:0.44.

post-processing of polycarbonate:

The polycarbonate obtained from the fourth polymerizer was introduced into a vented twin-shaft extruder in a molten state through a pipe without contacting air to carry out post-processing consisting of the deactivation of the polymerization catalyst, the removal of low-boiling substances contained in the polymer and the addition of additives in the same manner as in Example 1. The used vented twin-shaft extruder was an intermeshing twin-shaft extruder having two processing zones each consisting of a kneading portion and a vent portion.

In the first processing zone of the extruder, the deactivation of the catalyst and the removal of low-boiling substances contained in the polycarbonate were carried out in the same manner as in Example 1.

In the second processing zone, 1,000 ppm based on the polymer of monoglyceride stearate as a release agent and 300 ppm based on the polymer of tris(2,4-di-t-butylphenyl)phosphite as a thermal stabilizer were added to the polymer in the same manner as in the fifth processing zone of Example 1.

The polycarbonate mixed with the additives was extruded from the extruder, filtered with a polymer filter having an opening size of 40 µm after the pressure was raised by a gear pump, and pelletized through a die. When the low-boiling components of the obtained polycarbonate were measured, it contained 30 ppm of phenol and 120 ppm of DPC and had the same color b value and the same number of foreign substances having a particle diameter of 0.5 µm or

more as the values measured at the outlet of the fourth polymerizer, a viscosity average molecular weigh of 23,500 and an OH terminal content of 19.5 mol% which were almost the same as the values measured at the outlet of the fourth polymerizer.

Example 3

sheet evaluation example

A polycarbonate pellet produced in the same manner as in Example 2 except that 30 ppm of SANDOSTAB P-EPQ (of Clariant Co., Ltd.) was added to the polymer as a phosphorus-based stabilizer in place of monoglyceride stearate and tris(2,4-di-t-butylphenyl)phosphite was molten, quantitatively supplied by a gear pump and fed to the T die of a molding machine. The polycarbonate was melt extruded to form a sheet having a thickness of 2 mm or 0.2 mm and a width of 800 mm while it was sandwiched between an end surface cooling roll and an end surface roll, or touched on one side.

A visible light curable plastic adhesive (BENEFIX PC of Ardel Co., Ltd.) was applied to one side of the obtained aromatic polycarbonate sheet (thickness of 2 mm) which was then joined to the same polycarbonate sheet while it was extruded in one direction such that air bubbles should not be contained therebetween, and the obtained laminate was cured by exposure to 5,000 mJ/cm$^2$ of visible radiation from an optical curing device equipped with a metal halide lamp. When the bonding strength of the thus obtained laminate was measured in accordance with JIS K-6852 (compression shear bonding strength testing method for adhesives), it was satisfactory at 12.6 MPa (128 Kgf/cm$^2$).

The obtained 0.2 mm-thick aromatic polycarbonate sheet was printed with a uniform solution prepared by mixing ink (Natsuda 70-9132: color 136D smoke) with a solvent (isophorone/cyclohexane/isobutanol = 40/40/20 (wt%)) by a silk screen printer and dried at 100°C for 60 minutes. The printed ink surface was satisfactory without a transfer failure.

Examples 4 to 10

evaluation of polymer blend compound

A polycarbonate produced in the same manner as in Example 2 except that 50 ppm of trimethyl phosphate was used as an additive was uniformly mixed with components shown in Tables 1 and 2 using a tumbler, the resulting mixture was pelletized by a 30 mm-diameter vented twin-shaft extruder (KTX-30 of Kobe Steel Co., Ltd.) while devolatization was carried out at a cylinder temperature of 260°C and a vacuum degree of 1.33 kPa (10 mmHg), and the obtained pellet was dried at 120°C for 5 hours and injection molded into a molded piece for measurement at a cylinder temperature of 270°C and a mold temperature of 80°C by an injection molding machine (SG150U of Sumitomo Heavy Industries, Ltd.) to carry out the following evaluations. The results are shown in Tables 1 and 2. Symbols in Tables 1 and 2 represent the following components.

ABS: styrene-butadiene-acrylonitrile copolymer; Suntac UT-61 (of Mitsui Chemicals, Inc.)
AS: styrene-acrylonitrile copolymer; Stylac-AS 767 R27 (of Asahi Chemical Industry Co., Ltd.)
PET: polyethylene terephthalate; TR-8580 (of Teijin Limited, intrinsic viscosity of 0.8)
PBT: polybutylene terephthalate; TRB-H (of Teijin Limited, intrinsic viscosity of 1.07)
MBS: methyl (meth)acrylate-butadiene-styrene copolymer; Kaneace B-56 (of Kaneka Corporation)
E-1: butadiene-alkyl acrylate-alkyl methacrylate copolymer; Paraloid EXL-2602 (of Kureha Chemical Industry Co., Ltd.)
E-2: composite rubber in which a polyorganosiloxane component and polyalkyl (meth)acrylate rubber component form a mutual penetration network structure; Metabrene S-2001 (of Mitsubishi Rayon Co., Ltd.)
T: talc; HS-T0.8 (of Hayashi Kasei Co., Ltd., average particle diameter L measured by a laser diffraction method = 5 μm, L/D = 8)
G: glass fiber; chopped strand ECS-03T-511 (of Nippon Electric Glass Co., Ltd., urethane bundling, fiber diameter of 13 μm)
W: wollastonite; Sikatec NN-4 (of Tomoe Kogyo Co., Ltd., number average fiber diameter D obtained by observation through an electron microscope = 1.5 μm, average fiber length = 17 μm, aspect ratio L/D = 20)
WAX: olefin-based wax obtained by copolymerizing α-olefin with maleic anhydride; Diacalna-P30 (of Mitsubishi Kasei Corporation) (content of maleic anhydride = 10 wt%))

The measurement methods in Table 1 and 2 are as follows.

(1) flexural modulus

The flexural modulus was measured in accordance with ASTM D790.

(2) notched impact value

A 3.2 mm-thick test piece was used and a weight was stricken against the test piece from the notch side to measure its impact value in accordance with ASTM D256.

(3) flowability

The flowability was measured with an Archimedes type spiral flow meter (a thickness of 2 mm and a width of 8 mm) at a cylinder temperature of 250°C, a mold temperature of 80°C and an injection pressure of 98.1 MPa.

Table 1

| | | | Ex.4 | Ex.5 | Ex.6 | Ex.7 |
|---|---|---|---|---|---|---|
| composition | polycarbonate of the present invention | wt% | 60 | 60 | 60 | 60 |
| | ABS | wt% | 40 | 40 | 40 | |
| | AS | wt% | | | | 30 |
| | MBS | wt% | | | | 10 |
| | total | part by weight | 100 | 100 | 100 | 100 |
| | G | part by weight | 15 | | | 15 |
| | W | part by weight | | 15 | | |
| | T | part by weight | | | 15 | |
| | WAX | part by weight | | 1 | 1 | |
| characteristic properties | flexural modulus | MPa | 3,400 | 3,200 | 2,950 | 3,300 |
| | flowability | cm | 35 | 30 | 33 | 39 |
| | notched impact value | J/m | 80 | 75 | 56 | 90 |

Ex.: Example

Table 2

| | | | Ex.8 | Ex.9 | Ex.10 |
|---|---|---|---|---|---|
| composition | polycarbonate of the present invention | wt% | 70 | 70 | 70 |
| | PBT | wt% | | 30 | 5 |
| | PET | wt% | 30 | | 25 |
| | total | part by weight | 100 | 100 | 100 |
| | E-1 | part by weight | 5 | 5 | |
| | E-2 | part by weight | | | 5 |
| | G | part by weight | 20 | | |
| | W | part by weight | | 10 | |
| | T | part by weight | | | 10 |
| | WAX | part by weight | | 1 | 1 |
| characteristic properties | flexural modulus | MPa | 5,900 | 3,600 | 3,450 |
| | chemical resistance | % | 90 | 85 | 84 |
| | notched impact value | J/m | 235 | 601 | 562 |

Ex.: Example

Comparative Example 1

production of polycarbonate

A first aromatic polycarbonate having a viscosity average molecular weight of 6,000 and an OH terminal content of 34.3 mol% based on the total of all the terminal groups was continuously obtained from the second polymerizer in the same manner as in Example 1, continuously extracted from the bottom portion of the second polymerizer by a gear pump and supplied into the third polymerizer. The third polymerizer was a vertical stirring tank without a fractionating column and the proportion of the surface area having a liquid depth of 50 mm or less to the surface area of the polymer in the third polymerizer was 5 % or less. The ester exchange of the oligocarbonate was further continued by maintaining the third polymerizer at a temperature of 270°C and a pressure of 1 Torr (133 Pa) as in Example 1 to obtain a polycarbonate having a viscosity average molecular weight of 15,200 after the end of polymerization which took 4.8 times longer than that of Example 1. This polycarbonate had an OH terminal content of 12.0 mol% based on the total of all the terminal groups and contained 55,700 foreign substances having a particle diameter of 0.5 μm or more per g, and its pellet had a color b value of 0.5. Thus, this polycarbonate was inferior in color and the content of foreign substances.

When the molar ratio of PhOH to DPC contained in vapor generated from the third polymerizer was measured, it was 1:0.09 which means that the ester exchange reaction accompanied by the elimination of phenol and the ester exchange reaction accompanied by the elimination of DPC occurred in a ratio of 1:0.09.

post-processing and moldability evaluation of polycarbonate:

Post-processing consisting of the deactivation of the polymerization catalyst, the removal of low-boiling substances contained in the polymer and the addition of additives was carried out in the same manner as in Example 1.

When the amounts of the low-boiling substances contained in the obtained polycarbonate were measured, the polycarbonate contained 22 ppm of phenol and 81 ppm of DPC and had the same color b value and the same number of foreign substances having a particle diameter of 0.5 μm or more as the values measured at the outlet of the third polymerizer, a viscosity average molecular weight of 15,100 and an OH terminal content of 12.5 mol% which were almost the same as the values measured at the outlet of the third polymerizer.

evaluation of moldability:

The disk moldability of the thus obtained pellet was evaluated.

The number of molded products obtained until a release failure occurred was 122,300 and the number of molded products used as a cloud index was 108,800 which was unsatisfactory.

Comparative Example 2

production of polycarbonate

An oligocarbonate having a viscosity average molecular weight of 6,000 and an OH terminal content of 34.3 mol% based on the total of all the terminal groups was continuously obtained from the second polymerizer in the same manner as in Example 1, continuously extracted from the bottom portion of the second polymerizer by a gear pump and supplied into the third polymerizer. The third polymerizer was of the same type as the polymerizer in Example 1 and maintained at a temperature of 270°C and a pressure of 1 Torr (133 Pa), and 200 x $10^{-6}$ mol based on bisphenol A of tetramethylammonium hydroxide was continuously supplied into the third polymerizer to promote an ester exchange reaction accompanied by the elimination of DPC so as to further polymerize the oligocarbonate, thereby obtaining a polycarbonate having a viscosity average molecular weight of 15,200. This polycarbonate had an OH terminal content of 70.0 mol% based on the total of all the terminal groups and contained 12,200 foreign substances having a particle diameter of 0.5 μm or more per g and its pellet had a color b value of -0.1. Thus, the polycarbonate did not show large reductions in color and the content of foreign matter but showed a high OH terminal content.

When the molar ratio of PhOH to DPC contained in vapor generated from the third polymerizer was measured, it was 1:2.17 which means that the ester exchange reaction accompanied by the elimination of phenol and the ester exchange reaction accompanied by the elimination of DPC occurred in a ratio of 1:2.17.

Comparative Example 3

production of polycarbonate

Polymerization was carried out in the same manner as in Example 1 except that 0.698 k-mol of DPC was used based on 0.70 k-mol of bisphenol A to continuously obtain an oligocarbonate having a viscosity average molecular weight of 6,000 and an OH terminal content of 51.4 mol% based on the total of all the terminal groups from the second polymerizer which was then continuously extracted from the bottom portion of the second polymerizer by a gear pump and supplied into the third polymerizer. The third polymerizer was of the same type as the polymerizer in Example 1 and maintained at a temperature of 270°C and a pressure of 1 Torr (133 Pa) to further polymerize the oligocarbonate, thereby obtaining a polycarbonate having a viscosity average molecular weight of 15,200. This polycarbonate had an OH terminal content of 60.5 mol% based on the total of all the terminal group and contained 10,400 foreign substances having a particle diameter of 0.5 µm or more per g, and its pellet had a color b value of -0.4. Thus, the polycarbonate did not show large reductions in color and the content of foreign matter but showed a high OH terminal content.

When the molar ratio of PhOH to DPC contained in vapor generated from the third polymerizer was measured, it was 1:0.081 which means that the ester exchange reaction accompanied by the elimination of phenol and the ester exchange reaction accompanied by the elimination of DPC occurred in a ratio of 1:0.081.

## Claims

**1.** A method of producing an aromatic polycarbonate, comprising the steps of:

(1) forming a first aromatic polycarbonate having a viscosity average molecular weight of at least 4,000 and a terminal hydroxy group content of 15 to 45 mol% based on the total of all the terminal groups by carrying out an ester exchange reaction between an aromatic dihydroxy compound and an aromatic carbonic acid diester; and

(2) forming a second aromatic polycarbonate having a viscosity average molecular weight of 10,000 or more and higher than the viscosity average molecular weight of the first aromatic polycarbonate and a lower terminal hydroxy group content based on the total of all the terminal groups than the terminal hydroxy group content of the first aromatic polycarbonate by subjecting the first aromatic polycarbonate to polymerization accompanied by a first ester exchange reaction for eliminating an aromatic monohydroxy compound and a second ester exchange reaction for eliminating an aromatic carbonic acid diester to ensure that the molar ratio of the aromatic monohydroxy compound to the aromatic carbonic acid diester becomes 1:0.1 to 1:1.

**2.** The method of claim 1, wherein the terminal hydroxy group content of the first aromatic polycarbonate is 20 to 40 mol% based on the total of all the terminal groups.

**3.** The method of clam 1, wherein the terminal hydroxyl group content of the second aromatic polycarbonate is 35 mol% or less based on the total of all the terminal groups.

**4.** The method of claim 1, wherein polymerization accompanied by the first ester exchange reaction and the second ester exchange reaction is carried out to ensure that the molar ratio of the aromatic monohydroxy compound to the aromatic carbonic acid diester becomes 1:0.2 to 1:0.7.

**5.** The method of claim 1, wherein the step (1) is carried out in the presence of an ester exchange catalyst comprising a combination of $1 \times 10^{-8}$ to $5 \times 10^{-5}$ equivalent of at least one metal compound selected from the group consisting of an alkali metal compound and an alkaline earth metal compound and $1 \times 10^{-5}$ to $5 \times 10^{-3}$ equivalent of a nitrogen-containing basic compound based on 1 mol of the aromatic dihydroxy compound.

**6.** The method of claim 1, wherein the aromatic dihydroxy compound and the aromatic carbonic acid diester are filtered with a filter as a mixture thereof at a temperature lower than the melting point of the aromatic dihydroxy compound before the step (1).

**7.** The method of claim 6, wherein the filter has a filter layer made of metal fibers and having a nominal filtration accuracy of 0.1 to 1 µm.

**8.** The method of claim 1, wherein the aromatic dihydroxy compound is 2,2-bis(4-hydroxyphenyl)propane and the

aromatic carbonic acid diester is diphenyl carbonate.

**9.** The method of claim 1, wherein the surface area of a polymer having a liquid depth of 50 mm or less is controlled to 50 % or more of the surface area of the polymer in a reactor for carrying out the polymerization of the step (2).

**10.** The method of claim 1 or 9, wherein the reactor for carrying out the polymerization of the step (2) is a horizontal single-shaft cylindrical reactor having an agitation blade which comprises two end disks, a plurality of hollow disks interposed between the two end disks, a plurality of support blades for connecting the end disks to the hollow disks, interconnecting the hollow disks and fixing them at predetermined intervals, and two independent end rotation axes fixed in the center portions of the two end disks and which does not have an actual rotation axis between the plurality of hollow disks, and the end disks and the hollow disks are perpendicular to the virtual rotation axis of the agitation blade.

**11.** The method of claim 10, wherein at least one of the plurality of support blades is in close vicinity to the shell wall of the reactor and the close end portion of the support blade is parallel to the shell wall in the spaces between the end disks and the hollow disks and the space between adjacent hollow disks.

**12.** The method of claim 11, wherein the at least one support blades is a flat plate extending in the virtual rotation axis direction of the agitation blade in the above spaces.

**13.** The method of claim 12, wherein the at least one support blade has an angle of 30 to 60° with respect to the tangent of its cylindrical section perpendicular to the virtual rotation axis of the agitation blade in the above spaces.

**14.** The method of claim 10, wherein the two end disks have cut-away openings.

**15.** The method of claim 10, wherein the horizontal single-shaft cylindrical reactor comprises a reactor inner chamber, defined by end plates and a shell wall, for storing the agitation blade, two bearings for supporting the two end rotation axes, and polymer return mechanisms interposed between the end plates and the bearings and provided with a spiral groove in a direction for returning a polymer adhered thereto to the reactor inner chamber along with the rotation of the end rotation axes.

**16.** The method of claim 1 or 9, wherein the reactor for carrying out the polymerization of the step (2) is a horizontal twin-shaft reactor having a cocoon-like section, formed by combining two cylinders extending in parallel to each other and comprising:

a) an end plate at the inlet of the reactor, an end plate at the outlet of the reactor in an opposite direction to the above end plate, a first agitation blade having a plurality of agitating units extending substantially in a horizontal direction of the reactor and a second agitating blade having a plurality of agitating units placed in parallel to the first agitating blade and substantially in a horizontal direction of the reactor,
b) the first agitating blade and the second agitating blade being placed close to each other so that they mesh with each other and rotate in the same direction in synchronism with each other to apply a reaction products to their agitating units and the shell wall of the reactor so as to form a new thin film; and
c) the inlet of the reaction products provided close to the end plate at the inlet of the reactor and above the first agitation axis and the outlet of the reaction products provided at the bottom of the reactor close to the end plate at the outlet of the reactor.

**17.** The method of claim 16, wherein the supply port of the reaction products of the reactor is provided in an upper portion of the end plate at the inlet of the reactor above the first agitation axis.

**18.** The method of claim 16, wherein the supply port of the reaction products of the reactor is provided in an upper portion of the shell wall of the reactor adjacent to the end plate at the inlet of the reactor.

**19.** The method of claim 16, wherein when seen from the direction of the agitation axis, the agitation units have substantially a convex lens-like section and agitation units at both ends of the agitation blades are in close vicinity to the end plates.

**20.** The method of claim 16, wherein at least some of the agitation units mounted to the respective agitation axes satisfy the following requirements (i) to (iii):

i) when seen from the direction of the agitation axis, the agitation units have substantially a convex lens-like section or spindle-like section,
ii) the agitation units are spaced apart from one another in the direction of the agitation axis,
iii) scrapers for the shell wall of the reactor which have a length substantially equivalent to the mounting interval of the agitation units (ii) above are attached to the end portions which are the apices of the spindle-like shape of the agitation units in the direction of the agitation axis, and agitation units at both ends of the agitation blades are placed in close vicinity to the end plates of the reactor.

**21.** The method of claim 16, wherein scrapers for the end plate having the function of collecting the reaction products and discharging it toward the rotation centers of the agitation blades are attached to sides opposite to the end plate of agitation units placed in close vicinity to the end plate at the inlet of the reactor.

**22.** The method of claim 21, wherein when one of the apices of the spindle shape is at 0°, the other apex is at 180° and the rotation direction of the agitation unit is normal, the scrapers for the end plate are attached to at least part of a 90° to 180° section and at least part of a 270 to 360° section in the rotation direction of the agitation unit of the periphery of the side opposite to the end plate of the agitation unit in such a manner that they are point symmetrical to each other.

**23.** The method of claim 16, wherein the horizontal twin-shaft reactor comprises a reactor inner chamber, defined by end plates and a shell wall, for storing the agitation blades, two bearings for supporting the end portions of two rotation axes, and polymer return mechanisms interposed between the end plates and the bearings and provided with a spiral groove in a direction for returning a polymer adhered thereto to the reactor inner chamber along with the rotation of the rotation axes.

**24.** The method of claim 16, wherein agitation units mounted at a position opposite to the end plate at the outlet of the reactor have the function of transporting a polymer toward the end plate at the outlet of the reactor.

**25.** The method of claim 24, wherein agitation units mounted at a position opposite to the end plate at the outlet of the reactor are substantially screw-shaped agitation units.

**26.** An aromatic polycarbonate produced by the method of claim 1 which has a terminal hydroxyl group content of 35 mol% or less based on the total of all the terminal groups and a viscosity average molecular weight of 10,000 or more and contains 50,000 or less particles having a particle diameter of 0.5 μm or more per g of the aromatic polycarbonate.

**27.** The aromatic polycarbonate of claim 26 which contains no more than 200 ppm of an aromatic monohydroxy compound and no more than 200 ppm of an aromatic carbonic acid diester.

**28.** The aromatic polycarbonate of claim 26 which further contains at least one compound selected from the group consisting of an organic sulfonic acid compound and a phosphorus compound.

**29.** The aromatic polycarbonate of claim 26 which is produced by adding and kneading at least one compound selected from the group consisting of an organic sulfonic acid compound and a phosphorus compound while an aromatic polycarbonate produced by the method of claim 1 is molten and then filtering the obtained product with a filter.

**30.** The aromatic polycarbonate of claim 29, wherein the filter has a nominal filtration accuracy of 1 to 50 μm.

**31.** The aromatic polycarbonate of claim 28 or 29, wherein the organic sulfonic acid compound is at least one selected from the group consisting of tetrabutylphosphonium dodecylbenzenesulfonate and tetrabutylammonium paratoluenesulfonate, and the phosphorus compound is at least one selected from the group consisting of phosphoric acid, phosphorous acid and esters thereof.

**32.** A composition comprising an aromatic polycarbonate produced by the method of claim 1 and at least one selected from the group consisting of an ester of an aliphatic alcohol and an aliphatic carboxylic acid, an inorganic filler and a thermoplastic resin other than a polycarbonate.

**33.** A composition comprising an aromatic polycarbonate produced by the method of claim 1 and an ester of an aliphatic alcohol and an aliphatic carboxylic acid.

**34.** The composition of claim 33 produced by adding and kneading an ester of an aliphatic alcohol and an aliphatic carboxylic acid while an aromatic polycarbonate produced by the method of claim 1 is molten and then filtering the obtained product with a filter.

**35.** The composition of any one of claims 32 to 34, wherein the ester of an aliphatic alcohol and an aliphatic carboxylic acid is at least one ester selected from the group consisting of an stearic acid ester of glycerin and a stearic acid ester of pentaerythritol.

**36.** The composition of claim 32, wherein the inorganic filler is at least one selected from the group consisting of glass fiber, carbon fiber, mica, calcium carbonate, titanium oxide, silica, alumina and clay.

**37.** The composition of claim 32, wherein the thermoplastic resin other than a polycarbonate is at least one selected from the group consisting of polyethylene terephthalate (PET), polytetramethylene terephthalate (PBT), acrylonitrile/butadiene/styrene copolymer resin (ABS) and impact-resistant polystyrene (HIPS).

## INTERNATIONAL SEARCH REPORT

International application No.
PCT/JP01/09874

A. CLASSIFICATION OF SUBJECT MATTER
Int.Cl[7] C08G 64/30, C08L 69/00

According to International Patent Classification (IPC) or to both national classification and IPC

B. FIELDS SEARCHED

Minimum documentation searched (classification system followed by classification symbols)
Int.Cl[7] C08G 64/00-64/42

Documentation searched other than minimum documentation to the extent that such documents are included in the fields searched

| | | | |
|---|---|---|---|
| Jitsuyo Shinan Koho | 1926-2002 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-310632 A (Daicel Chemical Industries, Ltd.), 09 November, 1999 (09.11.1999), column 1, lines 2 to 15 (Family: none) | 1-37 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 February, 2002 (04.02.02) | 12 February, 2002 (12.02.02) |
| Name and mailing address of the ISA/ Japanese Patent Office | Authorized officer |
| Facsimile No. | Telephone No. |

Form PCT/ISA/210 (second sheet) (July 1992)

F I G. 1

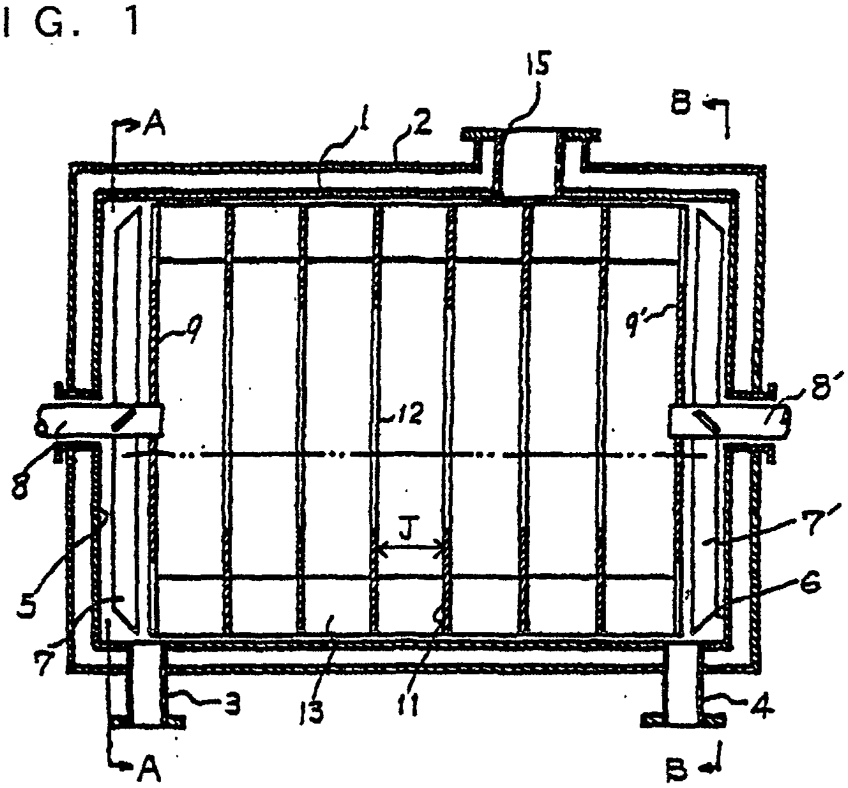


F I G. 2

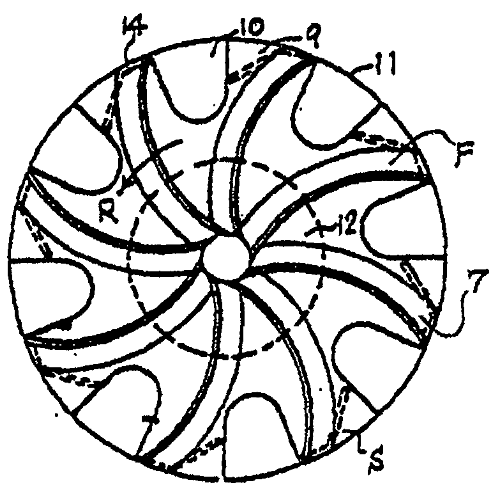

F I G. 3

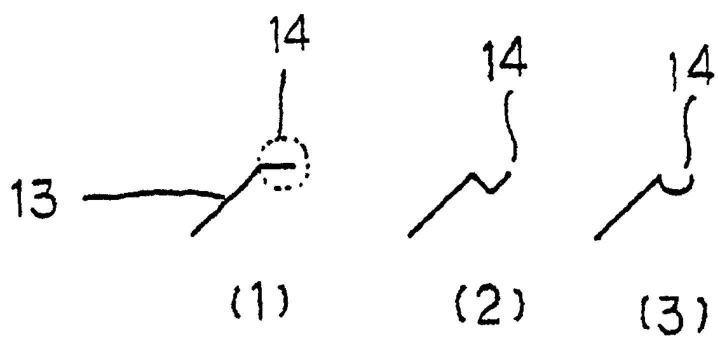
14
13
14
14
(1)
(2)
(3)

F I G. 4

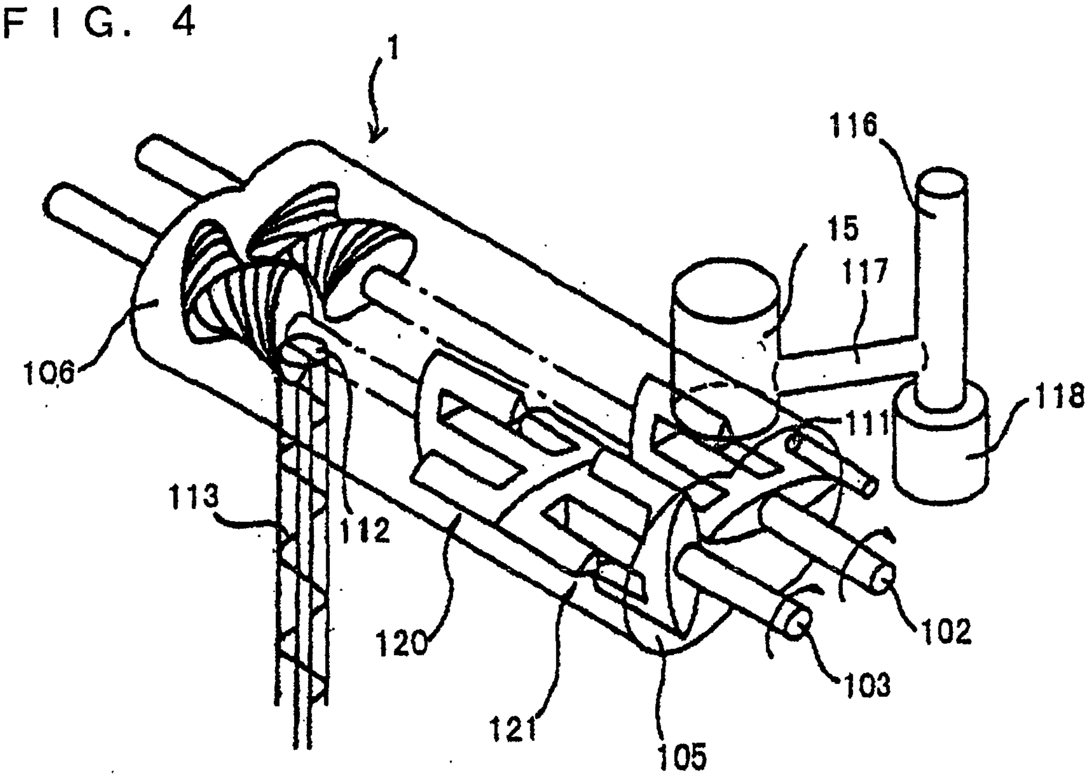
1
116
15
117
118
111
106
113
112
120
121
105
103
102

F I G. 5

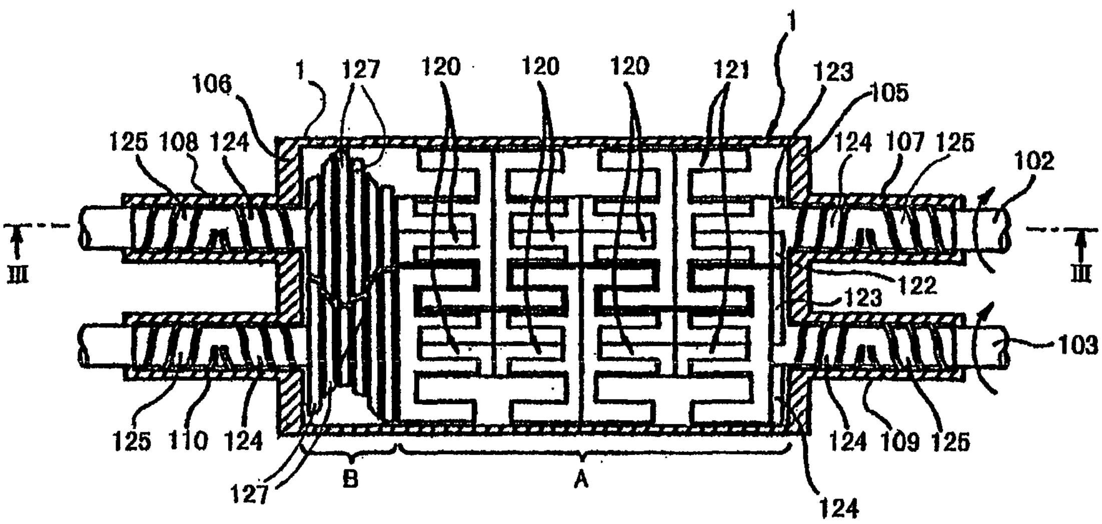
1
106
1
127
120
120
120
121
123
105
125
108
124
124
107
125
102
III
III
122
123
103
125
110
124
124
109
125
127
B
A
124

F I G. 6

(A)

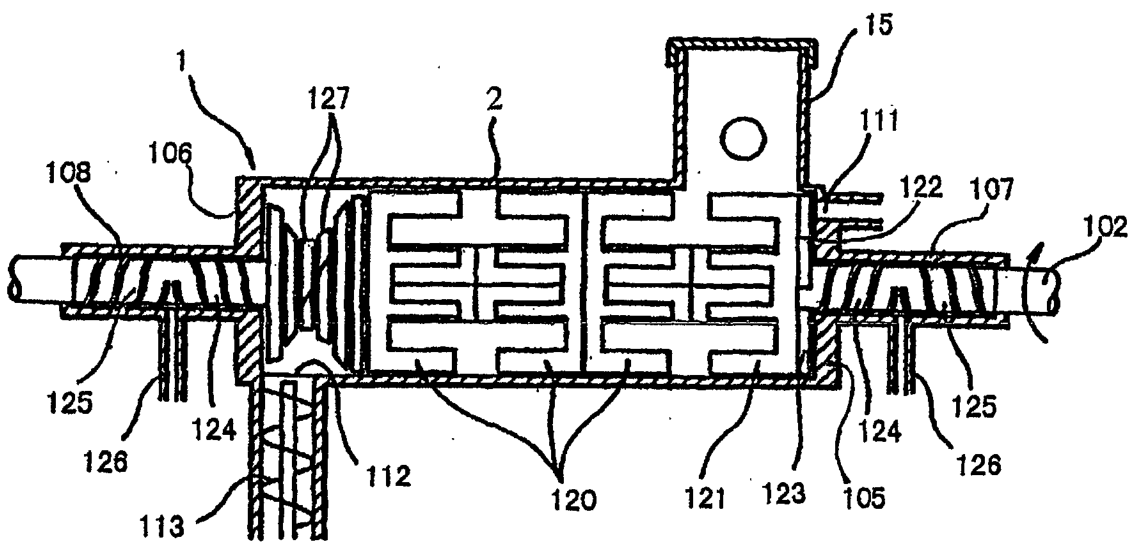
15
1
127
2
111
106
108
122
107
102
125
126
124
112
113
120
121
123
105
124
125
126

(B)

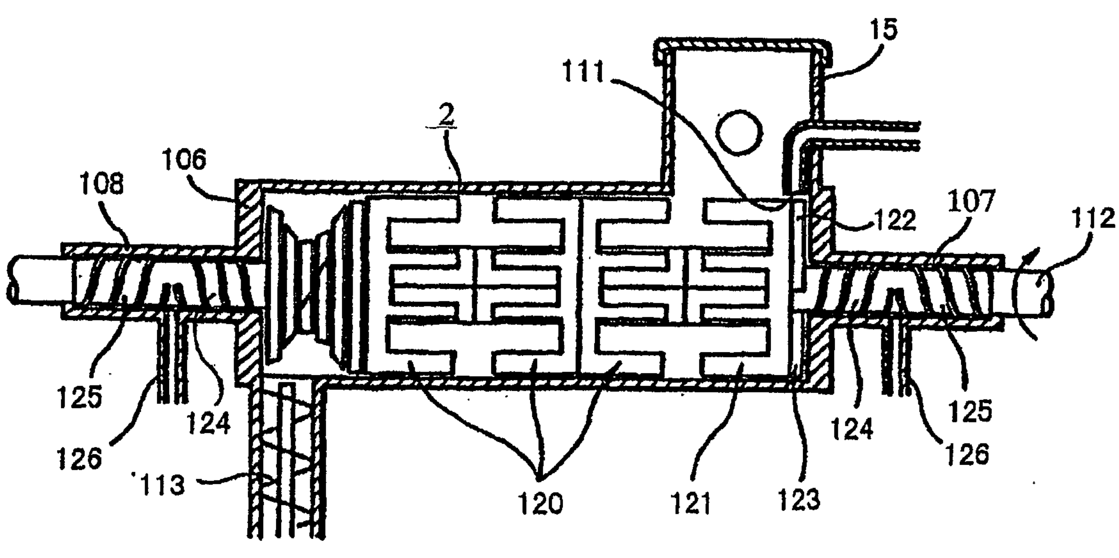
15
111
2
106
108
122
107
112
125
126
124
113
120
121
123
124
125
126

F I G. 7

(A) (B)

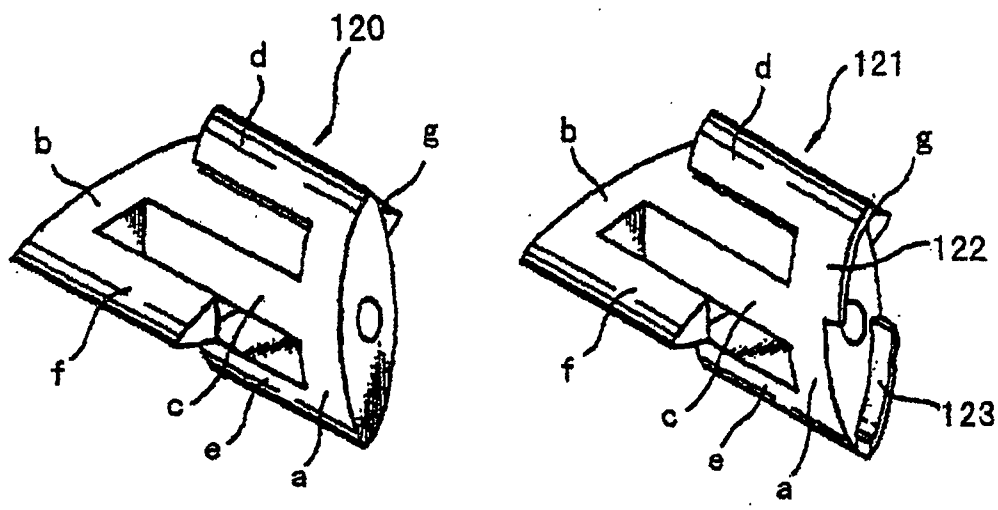


F I G. 8

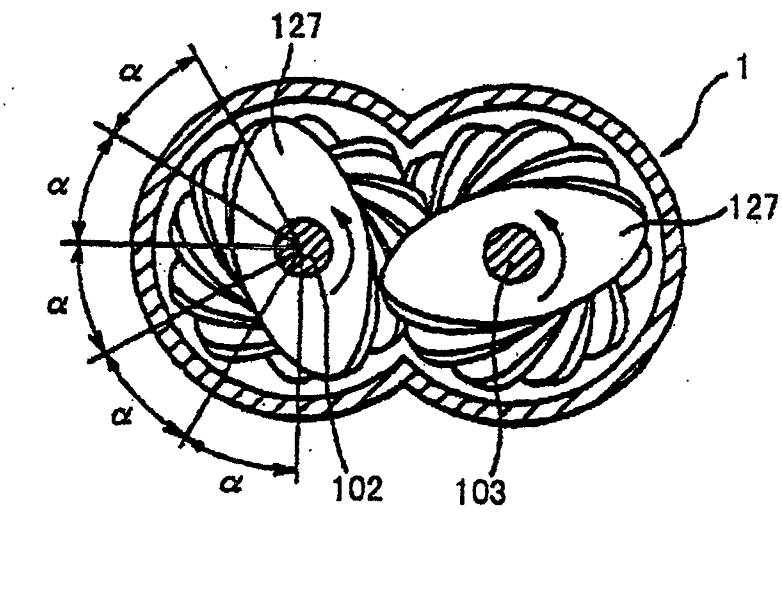

FIG. 9

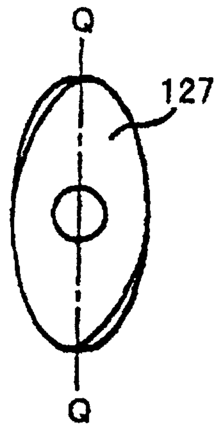


FIG. 10

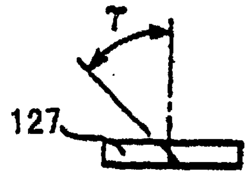


FIG. 11

(A)

(B)

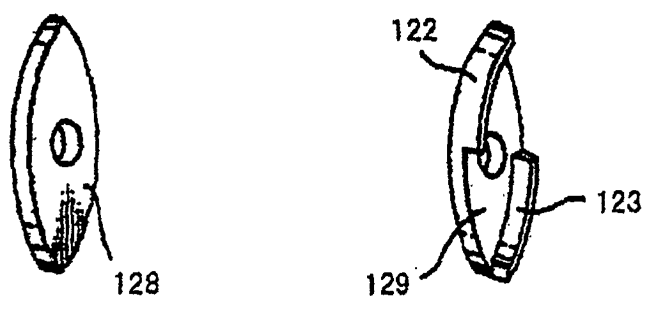

F I G. 1 2

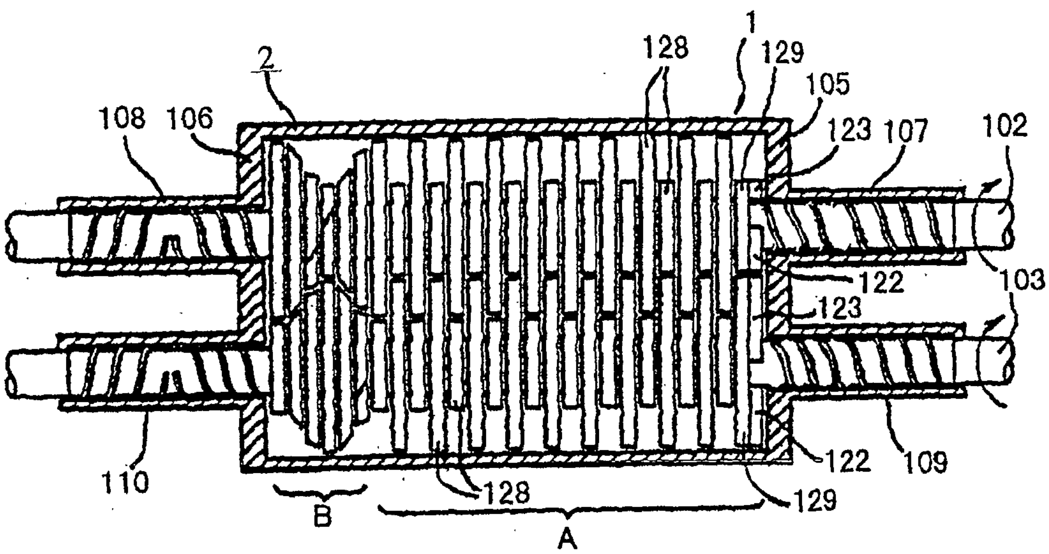
2
1
128
129
105
108
106
123
107
102
122
103
123
110
122
109
128
129
B
A

F I G. 1 3

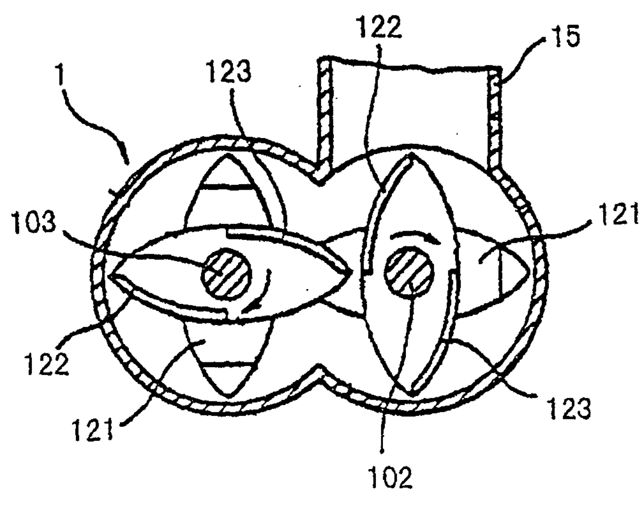
122
15
1
123
103
121
122
121
123
102

FIG. 14

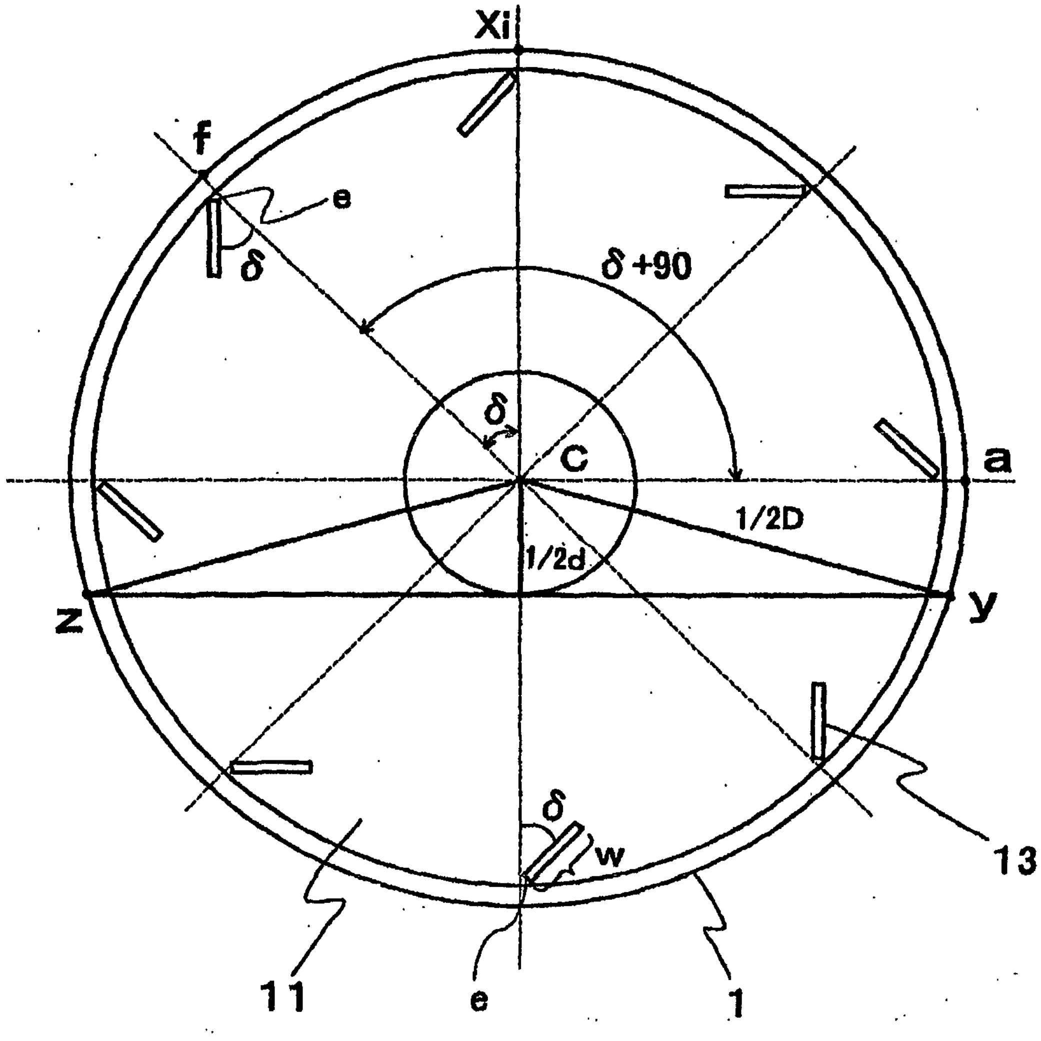

F I G. 1 5